(19) Europäisches Patentamt
European Patent Office
Office européen des brevets

(11) **EP 3 236 054 B1**

(12) **EUROPEAN PATENT SPECIFICATION**

(45) Date of publication and mention
of the grant of the patent:
**11.03.2020 Bulletin 2020/11**

(51) Int Cl.:
*F02D 41/02* (2006.01)   *F02D 41/40* (2006.01)
*F02D 41/04* (2006.01)   *F02D 41/10* (2006.01)
*F02D 1/16* (2006.01)

(21) Application number: **17167359.3**

(22) Date of filing: **20.04.2017**

(54) **CONTROL DEVICE OF INTERNAL COMBUSTION ENGINE**

STEUERUNGSVORRICHTUNG EINES VERBRENNUNGSMOTORS

DISPOSITIF DE COMMANDE POUR MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2016 JP 2016085875**

(43) Date of publication of application:
**25.10.2017 Bulletin 2017/43**

(73) Proprietor: **TOYOTA JIDOSHA KABUSHIKI
KAISHA
Toyota-shi,
Aichi-ken, 471-8571 (JP)**

(72) Inventors:
• **TAKADA, Noriyuki
Toyota-shi, Aichi-ken, 471-8571 (JP)**
• **ITO, Hisaki
Toyota-shi, Aichi-ken, 471-8571 (JP)**
• **KAWAE, Tsutomu
Toyota-shi, Aichi-ken, 471-8571 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
GB-A- 2 472 816     JP-B2- 3 838 299
US-A1- 2003 145 581     US-A1- 2005 252 198
US-A1- 2015 292 431

**Description**

BACKGROUND OF THE INVENTION

1. Field of the Invention

The invention relates to a control device of an internal combustion engine, and in particular to a control device of an internal combustion engine which performs post injection on an expansion stroke after combustion caused by main injection.

2. Description of Related Art

In Japanese Patent Application Publication No. 2010-106753 (JP 2010-106753 A), for example, a technology concerning an exhaust emission control system that regenerates a filter in an exhaust passage of an internal combustion engine as needed is disclosed. A control device of the exhaust emission control system performs post injection as one means for raising the temperature of the filter for filter regeneration. The post injection is injection of a small amount of fuel, which is secondarily performed on an expansion stroke after combustion caused by main injection. If the post injection is performed, unburned gas is discharged into the exhaust passage, so that the temperature of the filter is elevated. However, since the fuel injected by post injection is less likely or unlikely to be vaporized, oil dilution is likely to occur, more specifically, the fuel deposited on a cylinder wall is likely to be blended into oil. Thus, in the exhaust emission control system of JP 2010-106753 A as identified above, the post injection is divided into two or more stages. If the post injection is divided or multistaged, the amount of fuel injected per injection event is reduced; therefore, vaporization of the fuel is promoted, and the degree of oil dilution is reduced.

Further, the US patent applications US 2003/0145581 A1 and US 2005/0252198 A1 disclose a diesel engine fuel injection control with the features of the preamble of claim 1.

SUMMARY OF THE INVENTION

In the above system of JP 2010-106753 A, a limitation is placed on the injection amount per stage of the multistaged post injection, from the standpoint of reduction of the degree of oil dilution. However, if the post injection is multistaged, there arises a need to suppress or curb smoke generation. Namely, it is required to start post injection at the earliest time as possible on the expansion stroke, in order to inject the required injection amount of fuel during the multistaged post injection. In this case, the injected fuel may largely contribute to heat generation in the cylinder, depending on the injection amount of the earliest-stage post injection as one of the multistage post injections, and a large quantity of smoke may be generated.

The invention provides a control device of an internal combustion engine in which multistaged post injection is performed, which device can suppress generation of smoke and oil dilution due to the post injection.

A control device of an internal combustion engine according to a first aspect and to a second of the invention is provided. The internal combustion engine includes a fuel injection device that injects fuel into a cylinder. The control device includes an electronic control unit. The electronic control unit is configured to control the fuel injection device so as to perform post injection comprising multistage post injections, on an expansion stroke of the internal combustion engine after combustion caused by main injection, and control the fuel injection device such that an injection amount of an earliest-stage post injection as one of the multistage post injections is smaller than the injection amount of each of subsequent-stage post injections that follow the earliest-stage post injection.

In the control device according to the first aspect of the invention, the electronic control unit is configured to control the fuel injection device, so as to perform at least three-stage post injections comprising the earliest-stage post injection, a last-stage post injection, and a middle-stage post injection between the earliest-stage post injection and the last-stage post injection, and the electronic control unit is configured to set a target injection amount based on which the injection amounts of the middle-stage post injection and the last-stage post injection are increased according to an acceleration request, when the acceleration request is generated to the internal combustion engine. The electronic control unit is configured to control the fuel injection device so as to increase the injection amount of the middle-stage post injection before increasing the injection amount of the last-stage post injection, according to operating conditions of the internal combustion engine, when the acceleration request is generated to the internal combustion engine, and increase the injection amount of the last-stage post injection, after the injection amount of the middle-stage post injection is increased to a target value of the middle-stage post injection which is determined according to the target injection amount.

With the control device according to the first aspect, the injection amount of the earliest-stage post injection as one of the multistage post injections is set to a smaller amount than the injection amount of each of subsequent-stage post injections following the earliest-stage post injection. At the time when the earliest-stage post injection is started, the cylinder temperature is likely to be high, and the cylinder pressure is likely to be high. Therefore, if a large amount of fuel is injected under this situation, the fuel largely contributes to heat generation, and the amount of smoke generated is increased. According to the invention, heat generation due to the earliest-stage post injection can be suppressed, and therefore, generation of smoke and oil dilution due to the post injection can be suppressed. According to the control device as described above, when the fuel injection amount of the post injection is increased in response to the acceleration request, the injection amount of the last-stage post injection is increased, after the injection amount of the middle-stage post injection is increased to the target value. Since the cylinder pressure is low, in the case where increase of the boost pressure is delayed due to a delay in supercharging during acceleration, the amount of fuel deposited on a wall surface is more likely to be significantly increased as the stage of post injection is later. According to the invention, the injection amount of the last-stage post injection is increased after increase of the injection amount of the middle-stage post injection is completed; therefore, oil dilution is less likely or unlikely to occur when the injection amount of the post injection is increased during acceleration.

A control device of an internal combustion engine according to a first aspect and to a second of the invention is provided. The internal combustion engine includes a fuel injection device that injects fuel into a cylinder. The control device includes an electronic control unit. The electronic control unit is configured to control the fuel injection device so as to perform post injection comprising multistage post injections, on an expansion stroke of the internal combustion engine after combustion caused by main injection, and control the fuel injection device such that an injection amount of an earliest-stage post injection as one of the multistage post injections is smaller than the injection amount of each of subsequent-stage post injections that follow the earliest-stage post injection.

In the control device according to the second aspect of the invention, the electronic control unit is configured to control the fuel injection device, so as to perform at least three-stage post injections comprising the earliest-stage post injection, a last-stage post injection, and a middle-stage post injection between the earliest-stage post injection and the last-stage post injection. The electronic control unit is configured to set a target injection amount based on which the injection amounts of the middle-stage post injection and the last-stage post injection are reduced according to a deceleration request, when the deceleration request is generated to the internal combustion engine. The electronic control unit is configured to control the fuel injection device so as to reduce the injection amount of the middle-stage post injection before reducing the injection amount of the last-stage post injection, according to operating conditions of the internal combustion engine, when the deceleration request is generated to the internal combustion engine, and reduce the injection amount of the last-stage post injection, after the injection amount of the middle-stage post injection is reduced to a target value of the middle-stage post injection which is determined according to the target injection amount.

With the control device according to the second aspect, the injection amount of the earliest-stage post injection as one of the multistage post injections is set to a smaller amount than the injection amount of each of subsequent-stage post injections following the earliest-stage post injection. At the time when the earliest-stage post injection is started, the cylinder temperature is likely to be high, and the cylinder pressure is likely to be high. Therefore, if a large amount of fuel is injected under this situation, the fuel largely contributes to heat generation, and the amount of smoke generated is increased. According to the invention, heat generation due to the earliest-stage post injection can be suppressed, and therefore, generation of smoke and oil dilution due to the post injection can be suppressed. According to the control device as described above, when the fuel injection amount of the post injection is reduced in response to the deceleration request, the injection amount of the last-stage post injection is reduced, after the injection amount of the middle-stage post injection is reduced to the target value. When reduction of the boost pressure is delayed due to a delay in release from the supercharged state during deceleration, excess air is present in the cylinder, and the cylinder temperature and the cylinder pressure shift to the high-temperature, high-pressure side, whereby smoke is likely to be generated. According to this invention, since reduction of the injection amount of the middle-stage post injection is prioritized, generation of smoke during deceleration can be suppressed.

In the control device according to the first aspect and the second aspect, the electronic control unit may be configured to control the fuel injection device, such that the injection amount of each stage of the post injection is larger as the stage is later.

With the control device as described above, the injection amounts of the subsequent-stage post injections are set such that the injection amount of each stage of the post injection is larger as the stage is later. With this arrangement, the post injection can be carried out while increase of the cylinder pressure is suppressed; therefore, generation of smoke and oil dilution due to the post injection can be suppressed.

In the control device according to the first aspect and the second aspect, the electronic control unit may be configured to control the fuel injection device by setting a start time of the post injection according to an engine load and an engine speed of the internal combustion engine.

The amount of smoke generated due to the post injection is likely to be increased as the engine load or engine speed of the internal combustion engine is larger. With the control device as described above, the start time of the post injection can be set according to the engine load and the engine speed, so that generation of smoke can be suppressed.

In the control device according to the first aspect and the second aspect, the electronic control unit may be configured to control the fuel injection device by correcting the start time of the post injection based on a boost pressure and/or an intake air temperature of the internal combustion engine.

As the boost pressure is higher, the cylinder pressure is higher, and the fuel is more likely to be ignited. Therefore, if the post injection is performed in a condition where the boost pressure is high, the amount of smoke generated is increased. With the control device as described above, the start time of the post injection is corrected based on the boost pressure, so that the start time of the post injection can be set so as to suppress generation of smoke due to post injection. Also, as the intake air temperature is higher, the cylinder temperature is higher, and the fuel is more likely to be ignited. Therefore, if the post injection is performed in a condition where the intake air temperature is high, the amount of smoke generated is increased. With the control device as described above, the start time of the post injection is corrected based on the intake air temperature, so that the start time of the post injection can be set so as to suppress generation of smoke due to post injection.

In the control device according to the first aspect and the second aspect, the electronic control unit may be configured to control the fuel injection device, by setting an ending time of the post injection according to an engine load and an engine speed of the internal combustion engine.

As the engine speed is higher, and the engine load is higher, the fuel spray reach distance is reduced, and an influence of oil dilution is reduced. According to the control device as described above, the ending time of the post injection is set according to the engine load and the engine speed, so that the ending time of the post injection can be set so as to suppress oil dilution due to post injection.

In the control device as described above, the electronic control unit may be configured to control the fuel injection device, by correcting the ending time of the post injection based on a relationship between a boost pressure and a fuel injection pressure of the internal combustion engine and/or based on an intake air temperature of the internal combustion engine.

As a difference between the fuel injection pressure and the boost pressure is larger, the fuel spray reach distance is more likely to be increased. According to the control device as described above, the ending time of the post injection is corrected based on the relationship between the boost pressure and the fuel injection pressure, so that the ending time of the post injection can be set so as to suppress oil dilution due to post injection. Also, as the intake air temperature is higher, the cylinder temperature is higher, and the fuel spray reach distance is more likely to be reduced. According to the control device as described above, the ending time of the post injection is corrected based on the intake air temperature, so that the ending time of the post injection can be set so as to suppress oil dilution due to post injection.

In the control device according to the first aspect, the electronic control unit may be configured to obtain stepwise varying detection values of a boost pressure sensor that detects the boost pressure of the internal combustion engine, as an operating condition of the internal combustion engine, and control the fuel injection device so as to increase the injection amounts of the middle-stage post injection and the last-stage post injection in a stepwise fashion, based on the obtained detection values.

According to the control device according to the first aspect, when the fuel injection amount of the post injection is increased in response to the acceleration request, the stepwise varying detection values of the boost pressure sensor are obtained, and the amount by which the injection amount of the post injection is increased is set in a stepwise fashion, based on the obtained detection values. Therefore, according to the invention, the post injection amount can be set in view of the delay in supercharging during acceleration, and therefore, deviation of the air-fuel ratio from a nominal value during post injection can be reduced.

In the control device according to the first aspect, the electronic control unit may be configured to control the fuel injection device so as to perform a plurality of stages of post injections as the middle-stage post injection. The electronic control unit may be configured to control the fuel injection device so as to sequentially increase the injection amounts of the plurality of stages of post injections as the middle-stage post injection, starting with an earlier-stage post injection, according to the operating conditions of the internal combustion engine, when the engine load is a low load or a high load, and sequentially increase the injection amounts of the plurality of stages of post injections as the middle-stage post injection, starting with a later-stage post injection, according to the operating conditions of the internal combustion engine, when the engine load is a middle load.

The injection time has a larger influence on generation of smoke as the stage of post injection is earlier, and the injection time has a larger influence on oil dilution as the stage of post injection is later. Also, since the amount of increase of the cylinder pressure with respect to the injection amount is larger as the engine load is higher, generation of smoke is more likely to become a problem than oil dilution. It is, however, to be noted that, when the engine load is a high load, the generated smoke is re-burned; therefore, generation of smoke does not become a problem, but the oil dilution becomes a problem. According to the control device as described above, which of suppression of smoke generation and suppression of oil dilution should be prioritized is determined according to the load, and the order of increase of the injection amounts of the plural middle-stage post injections is set based on the determination. Thus, both suppression of oil dilution and suppression of smoke generation can be achieved, irrespective of the engine load condition.

In the control device according to the first aspect, the electronic control unit may be configured to control the fuel injection device so as to change injection timing of the post injection to a retard side, when an acceleration request is generated to the internal combustion engine. The electronic control unit may be configured to control the fuel injection device so as to change an injection time of the earliest-stage post injection to the retard side, before changing the injection times of the middle-stage post injection and the last-stage post injection to the retard side, when the acceleration request is generated to the internal combustion engine.

According to the control device according to the first aspect, when the injection time of each stage of the multistaged post injection is changed to the retard side in response to the acceleration request, the injection time of the earliest-stage post injection is retarded before the injection times of the subsequent-stage post injections are retarded. The injection time of the earliest-stage post injection has a smaller influence on oil dilution, as compared with the subsequent-stage post injections. Therefore, according to the invention, it is possible to retard the injection timing of the post injection while suppressing oil dilution.

In the control device according to the first aspect, when the injection timing of the post injection is changed to the retard side, and an interval between a given stage of the post injection whose injection time is to be changed and a subsequent-stage post injection becomes smaller than a predetermined minimum interval, the electronic control unit may be configured to control the fuel injection device so as to change the injection time of the subsequent-stage post injection to the retard side as well as that of the given stage of the post injection, so that the minimum interval is maintained.

According to the control device according to the first aspect, it is possible to retard the injection timing while assuring the minimum interval between each pair of adjacent stages of the post injection.

In the control device according to the second aspect, the electronic control unit may be configured to obtain stepwise varying detection values of a boost pressure sensor that detects the boost pressure of the internal combustion engine, as an operating condition of the internal combustion engine, and control the fuel injection device so as to reduce the injection amounts of the middle-stage post injection and the last-stage post injection in a stepwise fashion, based on the obtained detection values.

According to the control device as described above, when the fuel injection amount of the post injection is reduced in response to the deceleration request, the stepwise varying detection values of the boost pressure sensor are obtained, and the amount by which the injection amount of the post injection is reduced is set in a stepwise fashion, based on the obtained detection values. Therefore, according to the invention, the post injection amount can be set in view of the delay in release from the supercharged state during deceleration, and therefore, deviation of the air-fuel ratio from its nominal value during post injection can be reduced.

In the control device according to the second aspect, the electronic control unit may be configured to control the fuel injection device so as to change injection timing of the post injection to an advance side, when a deceleration request is generated to the internal combustion engine. The electronic control unit may be configured to control the fuel injection device so as to change an injection time of the last-stage post injection to the advance side, before changing the injection times of the middle-stage post injection and the earliest-stage post injection to the advance side, when the deceleration request is generated to the internal combustion engine.

According to the control device as described above, when the injection time of each stage of the multistaged post injection is changed to the advance side in response to the deceleration request, the injection time of the last-stage post injection is advanced before the injection times of the earliest-stage and middle-stage post injections are advanced. Change of the injection time of the last-stage post injection has a smaller influence on generation of smoke, as compared with change of the injection times of the earliest-stage and middle-stage post injections. Therefore, according to the invention, it is possible to advance the injection time of the post injection while suppressing generation of smoke.

In the control device according to the second aspect, the electronic control unit may be configured to control the fuel injection device so as to perform a plurality of stages of post injections as the middle-stage post injection. The electronic control unit may be configured to control the fuel injection device so as to sequentially reduce the injection amounts of the plurality of stages of post injections as the middle-stage post injection, starting with a later-stage post injection, according to the operating conditions of the internal combustion engine, when the engine load is a low load or a high load, and sequentially reduce the injection amounts of the plurality of stages of post injections as the middle-stage post injection, starting with an earlier-stage post injection, according to the operating conditions of the internal combustion engine, when the engine load is a middle load.

According to the control device as described above, it is possible to advance the injection timing while assuring the minimum interval between each pair of adjacent stages of the post injection.

In the control device as described above, when the injection timing of the post injection is changed to the advance side, and an interval between a given stage of the post injection whose injection time is to be changed and a previous-stage post injection becomes smaller than a predetermined minimum interval, the electronic control unit may be configured to control the fuel injection device so as to change the injection time of the previous-stage post injection to the advance side as well as that of the given stage of the post injection, so that the minimum interval is maintained.

The injection time has a larger influence on generation of smoke as the stage of post injection is earlier, and the injection time has a larger influence on oil dilution as the stage of post injection is later. Also, since the amount of increase of the cylinder pressure with respect to the injection amount is larger as the engine load is higher, generation of smoke is more likely to become a problem than oil dilution. It is, however, to be noted that, when the engine load is a high load, the generated smoke is re-burned; therefore, generation of smoke does not become a problem since, but oil dilution becomes a problem. According to the control device as described above, which of suppression of smoke generation and suppression of oil dilution should be prioritized is determined according to the load, and the order of reduction of the injection amounts of the plural middle-stage injections is set based on the determination; therefore, both suppression of oil dilution and suppression of smoke generation can be achieved, irrespective of the engine load condition.

In the control device according to the first aspect and the second aspect, the internal combustion engine may include a NOx storage reduction catalyst disposed in an exhaust passage of the internal combustion engine. The electronic control unit may be configured to control the fuel injection device so as to perform the post injection, when NOx stored in the NOx storage reduction catalyst reaches a predetermined storage limit amount.

According to the control device as described above, the post injection is carried out when the amount of NOx stored in the NOx storage reduction catalyst reaches the predetermined storage limit amount. Thus, a reductant can be supplied to the NOx storage reduction catalyst, so that the stored NOx can be effectively converted and cleaned.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a view showing the general configuration of an internal combustion engine system as an example;
FIG. 2 is a view showing change of the cylinder pressure with respect to the cylinder temperature over a period from the compression stroke to the expansion stroke;
FIG. 3 is a view showing the amount of smoke generated with respect to the crank angle, for each injection amount of post injection;
FIG. 4 is a view showing the injection timing of post injection with respect to the injection amount of post injection under an equal smoke condition where the amount of smoke generated is equal;
FIG. 5 is one example of a map in which the number of times of post injections is associated with the engine speed and the engine load;
FIG. 6 is one example of a map in which the interval between each pair of adjacent stages of post injection is associated with the engine speed and the engine load;
FIG. 7 is a map showing the injection amount of each stage with respect to the total injection amount of post injection;
FIG. 8 is a view showing differences in change of the cylinder pressure and the cylinder temperature due to differences in an injection pattern of post injection;
FIG. 9 is one example of a map in which the basic start time of post injection is associated with the engine speed and the engine load;
FIG. 10 is a map in which a correction amount of the basic injection start time is set with respect to the boost pressure;
FIG. 11 is a map in which the correction amount of the basic injection start time is set with respect to the intake air temperature;
FIG. 12 is one example of a map in which the basic ending time of post injection is associated with the engine speed and the engine load;
FIG. 13 is a map in which the correction amount of the basic injection ending time is set with respect to a pressure difference;
FIG. 14 is a map in which the correction amount of the basic injection ending time is set with respect to the intake air temperature;
FIG. 15 is a flowchart of a routine executed in the system of the example;
FIG. 16 is a time chart showing various state quantities of post injection during acceleration;
FIG. 17 is a view showing change of the cylinder pressure with respect to the cylinder temperature over a period from the compression stroke to the expansion stroke;
FIG. 18 is a view showing change of the cylinder pressure with respect to the cylinder temperature over a period from the compression stroke to the expansion stroke;
FIG. 19 is a flowchart of a routine executed in a system of a first embodiment;
FIG. 20 is a time chart showing various state quantities of post injection during deceleration;
FIG. 21 is a view showing change of the cylinder pressure with respect to the cylinder temperature over a period from the compression stroke to the expansion stroke;
FIG. 22 is a flowchart of a routine executed in a system of a second embodiment;

FIG. 23 is a view useful for explaining the order of increase of the injection amount when injection amount increase control is performed on four-stage post injection;

FIG. 24 is a view showing change of the cylinder pressure with respect to the cylinder temperature over a period from the compression stroke to the expansion stroke;

FIG. 25 is a view useful for explaining operation to change the injection timing of post injection during deceleration; and

FIG. 26 is a view useful for explaining operation to change the injection timing of post injection during deceleration.

DETAILED DESCRIPTION OF EMBODIMENTS

Some embodiments of the invention will be described with reference to the drawings. It is, however, to be understood that, when numbers, such as the number of pieces of each element, numerical quantity, amount, and range, are mentioned in the description of embodiments below, this invention is not limited to the numbers thus mentioned, except for the case where the numbers are particularly clearly specified or apparently specified in principle. Also, the structures, steps, etc. described in the embodiments below are not necessarily essential to this invention, except for the case where they are particularly clearly specified or apparently specified in principle.

1-1 Configuration of Internal Combustion Engine of the example

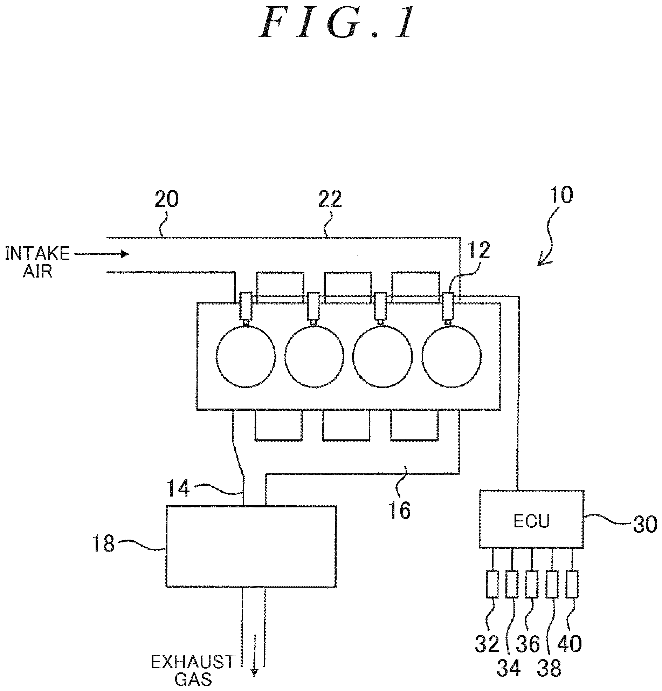

FIG. 1 shows the general configuration of an internal combustion engine system as an example. As shown in FIG. 1, the system of this example includes a four-cycle diesel engine (which will be simply called "engine") 10 having a plurality of cylinders (four cylinders in FIG. 1). The engine 10 is installed on the vehicle, and serves as its power source.

A fuel injection valve 12 as a fuel injection device that directly injects fuel into a cylinder is mounted in each cylinder of the engine 10. An exhaust passage 14 of the engine 10 branches off via an exhaust manifold 16, to be connected to exhaust ports (not shown) of respective cylinders. The exhaust passage 14 is connected to an exhaust turbine (not shown) of a turbocharger. A NOx Storage-Reduction catalyst (which will be called "NSR") 18 having a function of storing and treating NOx in exhaust gas is provided, on the downstream side of the exhaust turbine in the exhaust passage 14.

An air cleaner (not shown) is provided in the vicinity of an inlet of an intake passage 20 of the engine 10. Air drawn into the intake passage 20 through the air cleaner is compressed by a compressor (not shown) of the turbocharger, and then cooled by an intercooler (not shown). The intake air that has passed through the intercooler is distributed to intake ports (not shown) of respective cylinders via an intake manifold 22.

Some sensors for obtaining information concerning operating conditions of the engine 10 are mounted at various locations of the engine 10. The sensors include a crank angle sensor 32 that detects rotation of a crankshaft, a boost pressure sensor 34 that detects the boost pressure, an air flow meter 36 that measures the flow rate of new air drawn into the intake passage 20, an accelerator pedal position sensor 38 that detects an output corresponding to the amount of operation of an accelerator pedal, and an intake air temperature sensor 40 that detects the intake air temperature.

The system shown in FIG. 1 includes a control device 30 that controls the engine 10. The control device 30 is an electronic control unit (ECU). The control device 30 has at least an input/output interface, memory, and CPU. The input/output interface is provided for receiving sensor signals from various sensors mounted in the engine 10 or the vehicle, and generating operation signals to actuators included in the engine 10. Various control programs and maps used for controlling the engine 10 are stored in the memory. The CPU reads the control programs from the memory for execution of the programs, and produces the operation signals based on the received sensor signals.

1-2 Operation of System of the example

1-2-1 NSR Cleaning Operation by Post Injection

The control device 30 operates the engine 10 at lean air-fuel ratios. During operation at lean air-fuel ratio, oxidants, such as NOx, are discharged in a larger amount than reductants, such as HC and CO. Thus, in the system of the first embodiment, the NSR 18 is provided in the exhaust passage 14. The NSR 18 has a function of storing NOx in the form of nitrate, such as $Ba(NO_3)_2$. Therefore, the system of the example is able to effectively curb release of NOx into the atmosphere, even during lean operation.

However, the NOx storage capacity of the NSR 18 is reduced as the storage amount increases. Therefore, if the engine 10 is kept operated at lean air-fuel ratios for a long period of time, NOx that was not adsorbed by the NSR 18 flows through into the downstream of the catalyst. Thus, in the system of the example, post injection for regularly reducing NOx stored in the NSR 18 is carried out. More specifically, the post injection is carried out, at the time when the amount of NOx stored in the NSR 18 reaches a predetermined storage limit amount. Here, the post injection indicates an injection form in which a small amount of fuel is injected into a cylinder, during an expansion stroke after combustion caused by main injection performed at around the intake top dead center (TDC). When the post injection is carried out, oxygen in the cylinder, which was not consumed by the combustion caused by the main injection, is consumed. As a result, the exhaust air-fuel ratio of the engine 10 temporarily becomes the stoichiometric air-fuel ratio or an air-fuel ratio richer than the stoichiometric ratio. Exhaust gas generated from combustion (which will be called "rich combustion") caused by the post injection contains large amounts of reductants, such as HC, CO, and $H_2$. When these reductants are introduced into the NSR 18, the NOx stored in the form of nitrate is reduced into NO, and desorbed from the base. The NOx thus desorbed is converted into $N_2$, etc. on the catalyst in the NSR 18. Thus, through execution of the post injection, the NOx stored in the NSR 18 can be subjected to desorption treatment, so that the NOx storage capacity can be effectively recovered.

1-2-2 Problems with Post Injection

Since the post injection is performed on the expansion stroke after combustion caused by the main injection, the fuel is deposited on a wall surface in the cylinder if penetration of fuel spray is strong, and the amount of oil dilution is increased. Thus, in the system of this example, the post injection is multistaged, i.e., divided into multiple stages. If the post injection is multistaged, the amount of fuel injected per injection event is reduced, and the penetration of the fuel spray is weakened, so that the oil dilution can be suppressed.

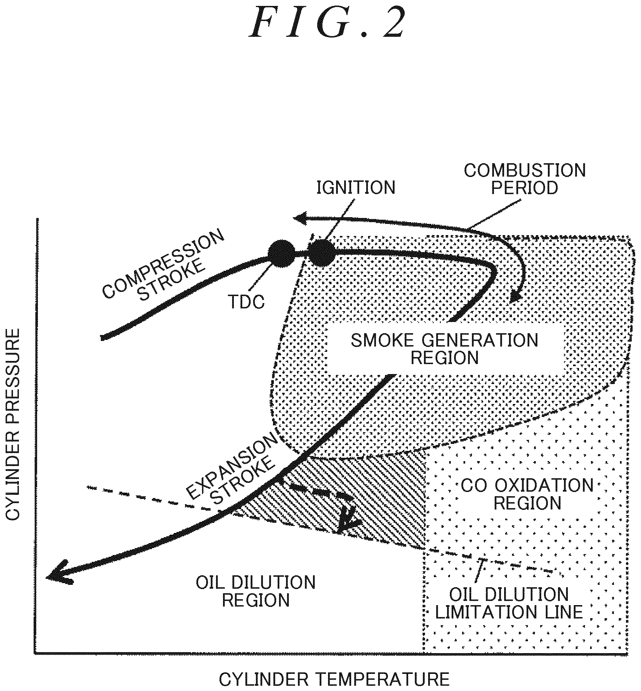

However, even if the post injection is multistaged, generation of smoke and oil dilution may become problems, depending on the injection timing and the injection amount. FIG. 2 shows change of the cylinder pressure with respect to the cylinder temperature over a period from the compression stroke to the expansion stroke. As shown in FIG. 2, in a smoke generation region in which both the cylinder temperature and the cylinder pressure are high, the amount of smoke generated from the injected fuel may become a problem. In an oil dilution region on the low-pressure side of an oil dilution limitation line, in which the injected fuel is deposited on the wall surface of the cylinder, the oil dilution may become a problem. Further, a CO oxidation region shown in FIG. 2 denotes a high-temperature region in which oxidation of CO is promoted. In the post injection, it is desirable that an operating point determined by the cylinder temperature and the cylinder pressure changes while avoiding the regions as described above, so as to suppress or curb generation of smoke, oil dilution, and CO oxidation.

1-3 Characteristics of Post Injection in System of the example

The inventor of this application has diligently pursued studies on condition of post injection under which the operating point can avoid the smoke generation region, oil dilution region, and CO oxidation region as described above. As a result, the inventor of this application found that it is an important condition for suppression of smoke generation and oil dilution to reduce the injection amount of the earliest-stage post injection, as one of a series of post injections or multistage post injections, to be smaller than the injection amounts of the next-stage and subsequent post injections.

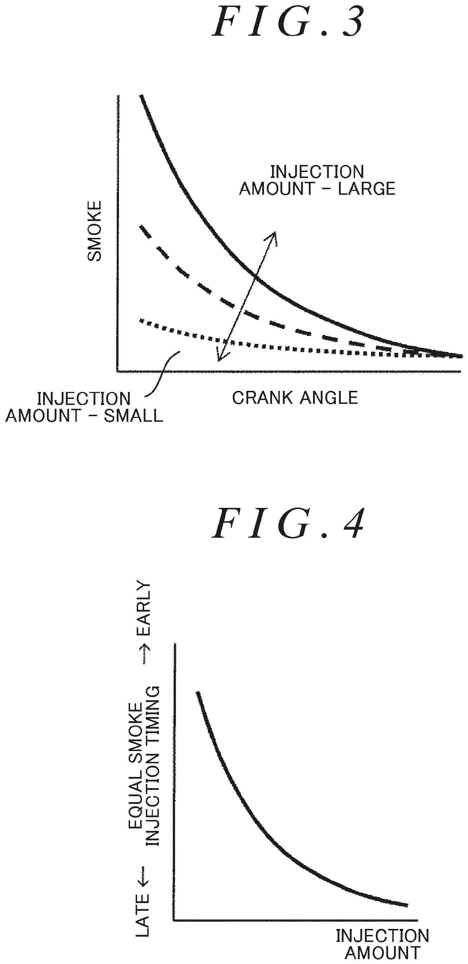

FIG. 3 shows the amount of smoke generated, relative to the crank angle, for each injection amount of post injection. It is understood from FIG. 3 that, if the injection amount is small, smoke is unlikely to be generated even with early injection (namely, even if the cylinder pressure and the cylinder temperature are high). FIG. 4 shows the injection timing of the post injection relative to the injection amount of the post injection, under an equal smoke condition where the smoke generation amount is equal. It is understood from FIG. 4 that, under the equal smoke condition, the injection start time can be made earlier as the injection amount is smaller.

If the injection start time can be made earlier, the fuel injectable period of the post injection can be prolonged, so that the degree of freedom for injection can be increased. Therefore, if the injection amount of the earliest-stage post injection as one of the multistage post injections is set to a small amount, it is possible to suppress generation of smoke, while increasing the degree of freedom for injection, by making the injection start time earlier.

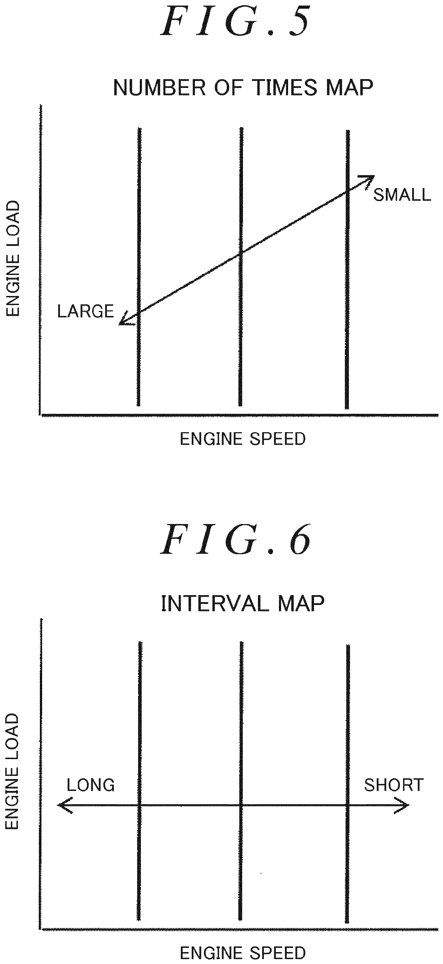

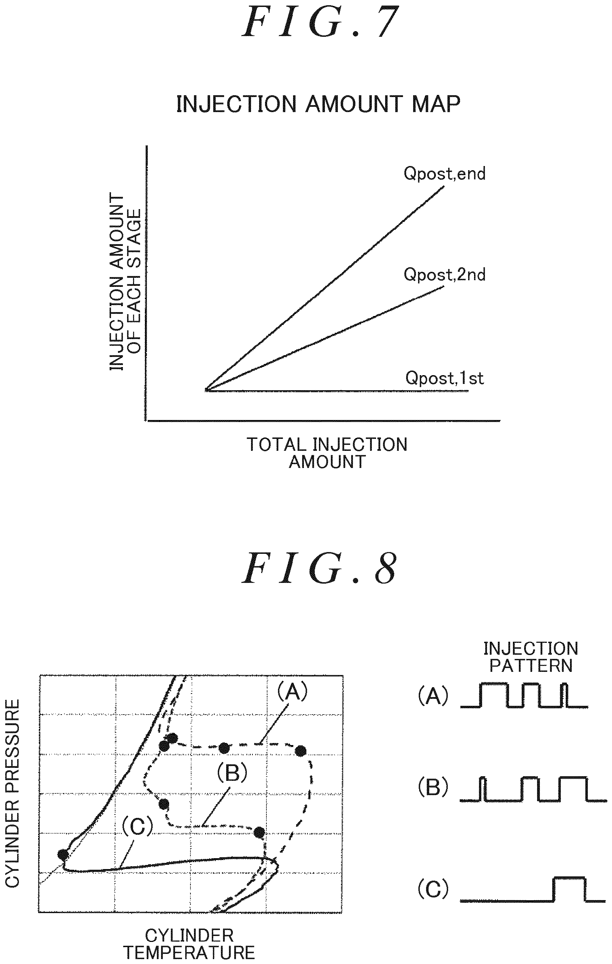

The number of times of multistage post injections, the injection amount of each stage, and the interval between each pair of adjacent stages can be calculated using maps as indicated below, for example. FIG. 5 is one example of a map in which the number of times of post injections is associated with the engine speed and the engine load. FIG. 6 is one example of a map in which the interval between each pair of adjacent stages of post injection is associated with the engine speed and the engine load. FIG. 7 is a map indicating the injection amount of each stage relative to the total injection amount of the post injection. The number of times of post injections and the interval between each pair of adjacent stages can be calculated using the maps shown in FIG. 5 and FIG. 6. As shown in FIG. 5 and FIG. 6, the number of times of post injections and the interval between each pair of adjacent stages greatly depend on the engine speed. This is because the actual time of the combustion cycle is shortened as the engine speed is higher.

The injection amount of each stage of post injection can be calculated using the map shown in FIG. 7. The total injection amount is specified as an injection amount that is required to make the exhaust air-fuel ratio in the injection period of post injection equal to a desired air-fuel ratio (e.g., the stoichiometric air-fuel ratio). As shown in FIG. 7, the injection amount "Qpost, 1st" of the earliest-stage post injection is set to a constant value, irrespective of the total injection amount of the post injection. This is because the earliest-stage post injection aims at increasing the cylinder temperature while suppressing generation of torque as far as possible. Also, the injection amounts of the next-stage and subsequent post injections (in FIG. 7, the injection amount "Qpost, 2nd" of the second-stage post injection and the injection amount "Qpost, end" of the last-stage post injection) are set in a stepwise fashion such that the injection amount becomes larger as the stage is later.

FIG. 8 shows differences in change of the cylinder pressure and the cylinder temperature due to differences in the injection pattern of the post injection. In FIG. 8, (A) indicates an injection pattern of post injection in which the injection amount is reduced as the stage is later, and (B) indicates an injection pattern of post injection in which the injection amount is increased as the stage is later, while (C) indicates an injection pattern having an undivided, single post injection. As shown in FIG. 8, in the injection pattern (A) in which the injection amount is reduced as the stage is later, the cylinder temperature largely shifts to the high-temperature side in the earliest-stage post injection. Therefore, the next-stage and subsequent post injections are performed in the cylinder having a high temperature and a high pressure, and the amount of smoke generated is increased. In the injection pattern (C) in which a single post injection is performed, generation of smoke is avoided by delaying the injection start time, but the post injection is performed in the cylinder having a low temperature and a low pressure, so that the fuel spray is deposited on the wall surface in the cylinder, and the oil dilution amount is increased. On the other hand, in the injection pattern (B) in which the injection amount is increased as the stage is later, the injection amount of the earliest-stage post injection is set to a small amount, so that the temperature and the pressure are less likely to be increased: therefore, the pressure is not excessively increased in the next-stage and subsequent post injections, and both generation of smoke and oil dilution can be suppressed. Thus, according to the injection pattern of the map shown in FIG. 7, it is possible to burn the fuel while suppressing increase of the pressure in the cylinder, thereby to effectively limit or reduce the amount of smoke generated.

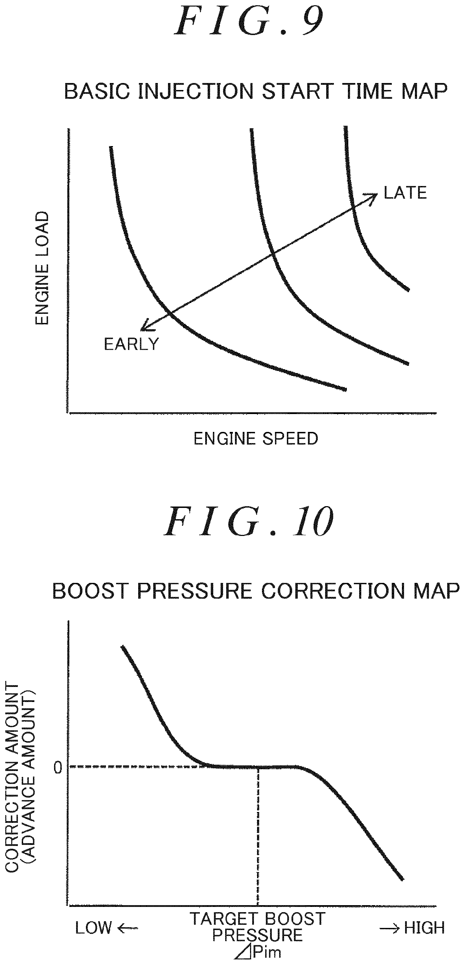

The start time and ending time of the post injection can be calculated using maps as indicated below, for example. The start time of the post injection mentioned herein means the start time of the earliest-stage post injection as one of the multistage post injections, and the ending time of the post injection means the ending time of the last-stage post injection. FIG. 9 is one example of a map in which the basic start time of post injection is associated with the engine speed and the engine load. As shown in FIG. 9, the basic start time of post injection is set to a later time (retarded) as the engine is in higher-speed and higher-load conditions. Since the cylinder temperature and the cylinder pressure are higher as the engine is in higher-speed and higher-load conditions, the injection start time is delayed in an attempt to suppress generation of smoke.

In this connection, the cylinder temperature and the cylinder pressure also change depending on the boost pressure and the intake air temperature. More specifically, since the cylinder pressure is higher as the boost pressure is higher, it can be determined that the engine is in a condition where the fuel is more likely to be ignited as the boost pressure is higher. Also, since the cylinder temperature is higher as the intake air temperature is higher, it can be determined that the engine is in a condition where the fuel is more likely to be ignited as the intake air temperature is higher. When the engine is in a condition where the fuel is highly likely to be ignited, combustion caused by the earliest-stage post injection is promoted, and the amount of smoke generated may be increased.

Thus, in the system of this example, it is preferable to calculate the final post injection start time, by using the following equation (1) in which a correction amount calculated from the boost pressure (which will be called "boost pressure correction amount") and a correction amount calculated from the intake air temperature (which will be called "intake air temperature correction amount") are added to the basic injection start time.

$$\text{Post injection start time} = \text{basic injection start time} + \text{boost pressure correction}$$
$$\text{amount} + \text{intake air temperature correction amount} \qquad (1)$$

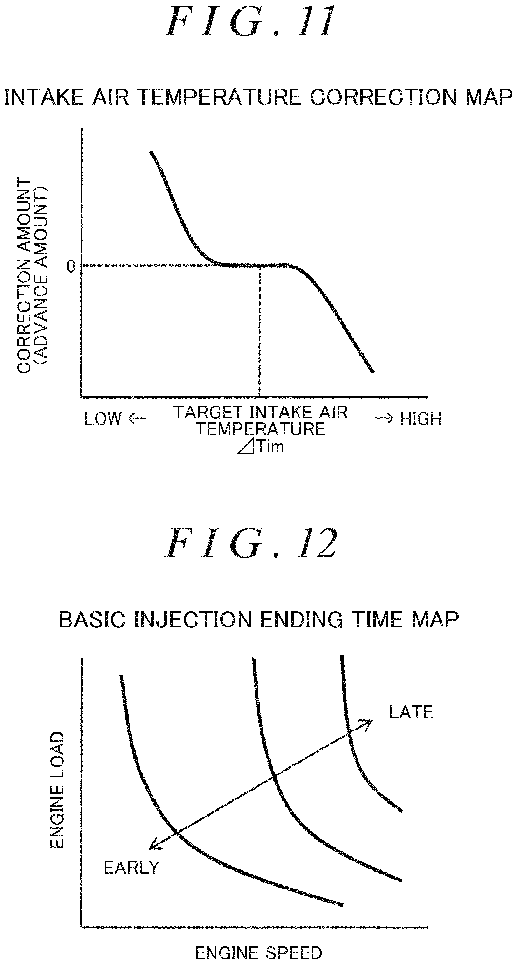

The boost pressure correction amount and the intake air temperature correction amount can be calculated according to maps as indicated below, for example. FIG. 10 is a map setting the correction amount of the basic injection start time with respect to the boost pressure. FIG. 11 is a map setting the correction amount of the basic injection start time with respect to the intake air temperature. In the map shown in FIG. 10, the boost pressure correction amount is specified so as to retard the basic injection start time when the boost pressure $\Delta$Pim is higher than a target boost pressure that is assumed in calculation of the basic injection start time, and advance the basic injection start time when the boost pressure $\Delta$Pim is lower than the target boost pressure. In the map shown in FIG. 11, the intake air temperature correction amount is specified so as to retard the basic injection start time when the intake air temperature $\Delta$Tim is higher than a target intake air temperature that is assumed in calculation of the basic injection start time, and advance the basic injection start time when the intake air temperature $\Delta$Tim is lower than the target intake air temperature. With this arrangement, an influence of change of the ignitability due to the boost pressure and the intake air temperature can be reflected by the start time of the post injection, and therefore, generation of smoke can be suppressed.

Further, the ending time of the post injection can be calculated using maps as described below, for example. The ending time of the post injection means the ending time of the last-stage post injection. FIG. 12 is one example of a map in which the basic ending time of the post injection is associated with the engine speed and the engine load. As shown in FIG. 12, the basic ending time of the post injection is set to a later time (retarded) as the engine is in higher-speed and higher-load conditions. As the engine is in higher-speed and higher-load conditions, the cylinder temperature and the cylinder pressure are higher, and the fuel spray reach distance is reduced. Therefore, it is intended to delay the injection ending time to the maximum within a range in which oil dilution can be suppressed.

The fuel spray reach distance also changes depending on the boost pressure, injection pressure, and the intake air temperature. More specifically, if a pressure difference between the injection pressure and the cylinder pressure is large, the fuel spray is likely to spread; therefore, it can be determined that the fuel spray reach distance is large. Also, if the intake air temperature is high, the cylinder temperature is high; therefore, vaporization of the fuel is promoted, and it can be determined that the fuel spray is less likely or unlikely to spread (namely, the fuel spray reach distance is small). In a condition where the fuel spray reach distance is large, the amount of fuel deposited on the wall surface in the cylinder is increased, and the oil dilution amount may be increased.

Thus, in the system of this example, it is preferable to calculate the final post injection ending time, by using the following equation (2) in which a correction amount (which will be called "pressure difference correction amount") calculated from a pressure difference between the injection pressure and the cylinder pressure, and an intake air temperature correction amount calculated from the intake air temperature, are added to the basic injection start time.

$$\text{Post injection ending time} = \text{basic injection start time} + \text{pressure difference correction}$$
$$\text{amount} + \text{intake air temperature correction amount} \qquad (2)$$

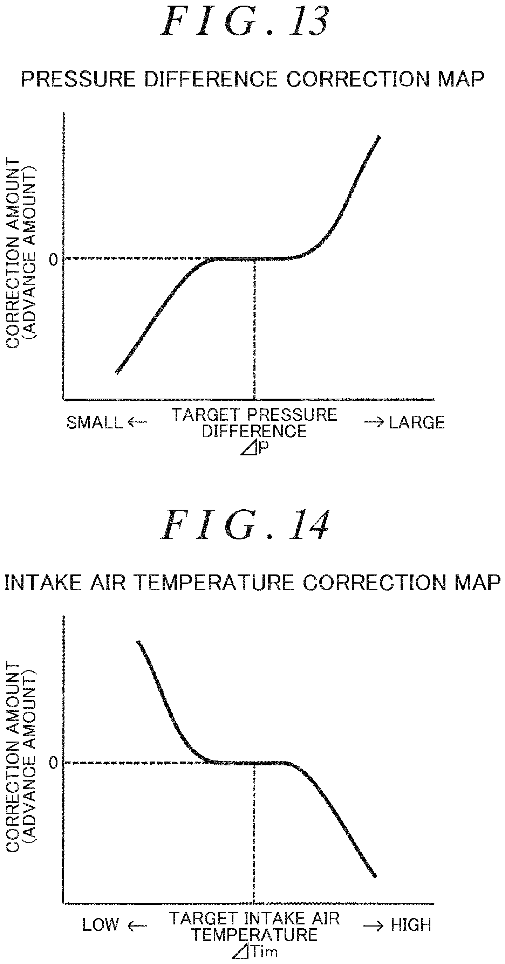

The pressure difference correction amount and the intake air temperature correction amount can be calculated from maps as indicated below, for example. FIG. 13 is a map setting the correction amount of the basic injection ending time with respect to the pressure difference. FIG. 14 is a map setting the correction amount of the basic injection ending time with respect to the intake air temperature. In the map shown in FIG. 13, the correction amount is specified so as to advance the basic injection ending time when the pressure difference $\Delta P$ is larger than a target pressure difference that is assumed in calculation of the basic injection ending time, and retard the basic injection ending time when the pressure difference $\Delta P$ is smaller than the target pressure difference. Since the cylinder pressure can be estimated from the boost pressure, the pressure difference $\Delta P$ can be calculated based on the following equation (3), for example.

$$\text{Difference } \Delta P = \text{fuel injection pressure} - \text{coefficient} \times \text{boost pressure} \qquad (3)$$

In the map as shown in FIG. 14, the correction amount is specified so as to advance the basic injection ending time when the intake air temperature $\Delta$Tim is higher than a target intake air temperature that is assumed in calculation of the basic injection ending time, and retard the basic injection ending time when the intake air temperature $\Delta$Tim is lower than the target intake air temperature. With this arrangement, an influence of change of the fuel spay reach distance due to the intake air temperature can be reflected by the ending time of the post injection, and therefore, the injection period can be assured while the oil dilution amount is suppressed.

1-4 Specific Processing of System of the example

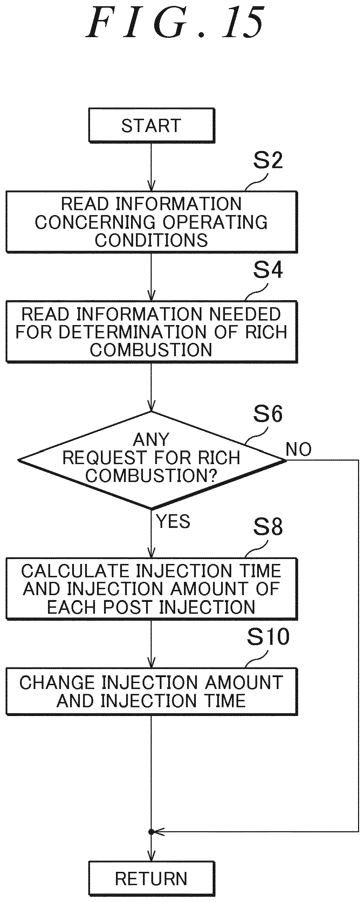

The specific processing performed by the system of the example will be described. FIG. 15 is a flowchart of a routine executed by the system of the example. The routine shown in FIG. 15 is repeatedly executed by the control device 30 during operation of the engine 10.

In the routine shown in FIG. 15, information concerning operating conditions of the engine 10, including the engine speed, engine load, intake air temperature, boost pressure, etc. calculated from various sensor signals, is read (step S2). Then, information needed for determining whether fuel-rich combustion by post injection is required is read (step S4). More specifically, information, such as a difference between pressures upstream and downstream of the NSR 18, catalyst temperature, NOx storage amount, is read as information for determining whether the NOx aftertreatment in the NSR 18 is required.

Next, it is determined whether a request for rich combustion is generated (step S6). More specifically, it is determined whether the request is generated based on the information read in the above step S4 for determining whether the rich combustion is required. As a result, the current cycle of this routine ends if it is determined that the rich combustion is not required, and the control proceeds to the next step if the rich combustion is required.

In the next step, the injection timing, injection amount, etc. for each stage of post injection are calculated (step S8). More specifically, the number of times of post injections, interval, start time, ending time, and the injection amount of each stage, which correspond to the operating conditions of the engine 10 read in the above step S2, are calculated, using the maps shown in FIGS. 5 - 7 and 9 - 14. Then, the injection amount, injection timing, etc. of the post injection are changed to values calculated in the above step S8 (step S10).

Thus, according to the system of the example, the injection amount of the earliest-stage post injection is made smaller than the injection amounts of the next-stage and subsequent stages, in the multistaged post injection. It is thus possible to limit or reduce the oil dilution amount while effectively suppressing generation of smoke during the post injection period.

In the system of the example as described above, the post injection is carried out for the NOx aftertreatment of the NSR 18 in the system including the NSR 18. However, the system that requires post injection is not limited to this type, but the example may be applied to a system that requires control for temporarily changing the exhaust air-fuel ratio to the rich side during operation at lean air-fuel ratios, for regeneration of a filter, or warm-up of a catalyst, for example.

Also, in the system of the example as described above, the post injection is carried out in the system including the turbocharger. However, the system that requires post injection is not limited to this type, but may not be configured to include a turbocharger. In this case, in control of the system of the example, the intake air pressure may be used in place of the boost pressure.

## 2 First Embodiment

In the system of the example as described above, the control device 30 executes the routine shown in FIG. 15, thereby to realize "post injection control means" of the example.

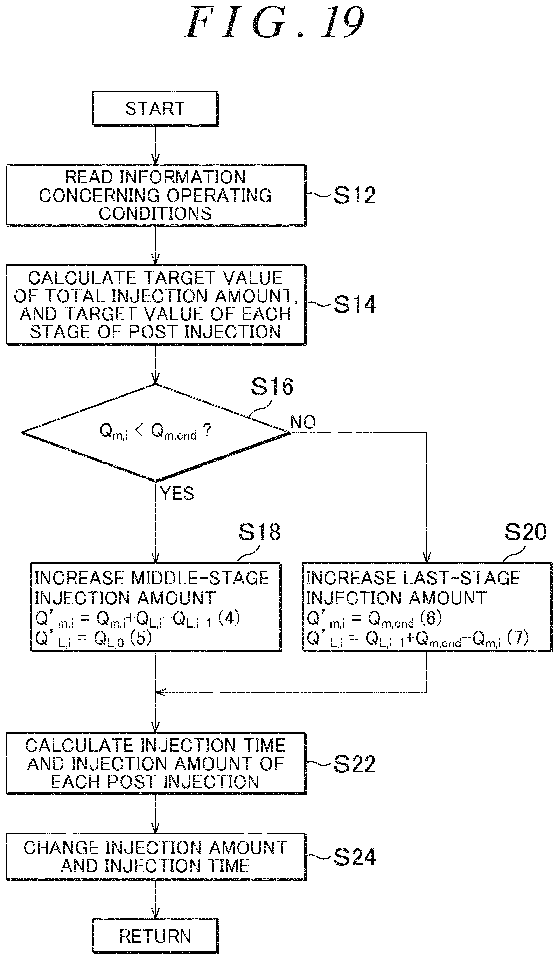

Next, a first embodiment of the invention will be described with reference to the drawings. The system of the first embodiment is realized by causing the control device 30 to execute a routine shown in FIG. 19 (which will be described later), using hardware configuration similar to that of the example.

### 2-1 Operation of System of First Embodiment

The system of the example performs the multistaged post injection, on the assumption that the engine 10 is in a steady state. However, it may be assumed that a request for acceleration is generated during execution of post injection, depending on operating conditions of the engine 10. When the engine 10 is in such a transient state, the boost pressure increases in response to the request for acceleration; therefore, the injection amount of the post injection needs to be increased in accordance with increase of the amount of air in the cylinder.

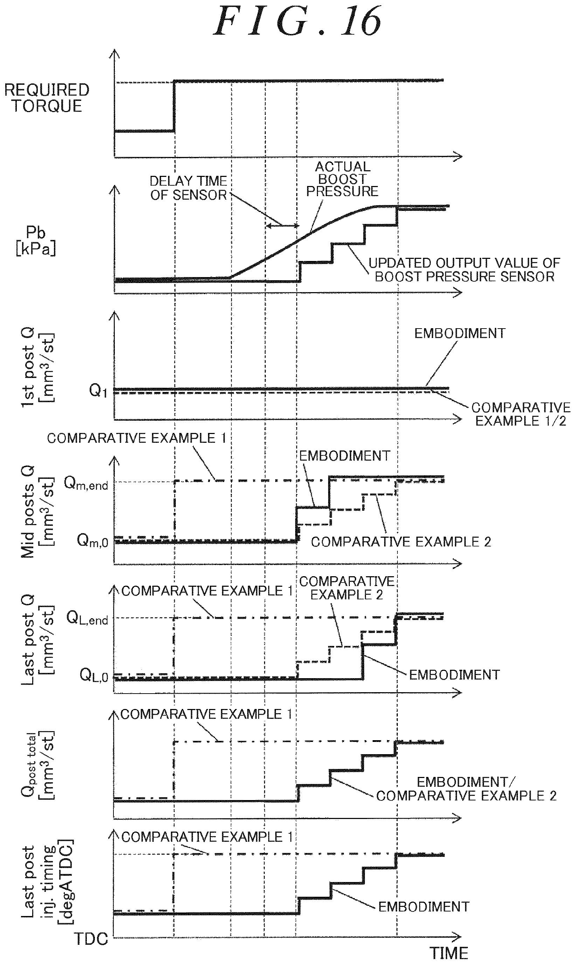

FIG. 16 is a time chart indicating various state quantities of post injection during acceleration. In FIG. 16, a chart of a first section (the uppermost section) indicates change of required torque with time, a chart of a second section indicates change of the boost pressure "Pb" with time, a chart of a third section indicates change of the injection amount "1st post Q" of the first-stage post injection with time, a chart of a fourth section indicates change of the injection amount "Mid posts Q" of the middle-stage post injection with time, a chart of a fifth section indicates change of the injection amount "Last post Q" of the last-stage post injection with time, a chart of a sixth section indicates change of the total injection amount "Qpost, total" of the post injection with time, and a chart of a seventh section (the lowermost section) indicates change of the injection timing "Last post inj. timing" of the last-stage post injection with time. The middle-stage post injection mentioned herein means intermediate post injection (which may include two or more stages) performed between the first-stage post injection and the last-stage post injection.

As is understood from the time chart of FIG. 16, the amount of air in the cylinder does not immediately increase even in the case where the required torque increases stepwise in response to the acceleration request. This is because transportation of air is delayed due to delay in supercharging. If the injection amount of the post injection is increased up to a target injection amount at a time in response to the increase of the required torque, as in Comparative Example 1 indicated by one-dot chain lines in FIG. 16, a shortage of air in the cylinder is created, and the exhaust air-fuel ratio turns into a richer air-fuel ratio than necessary.

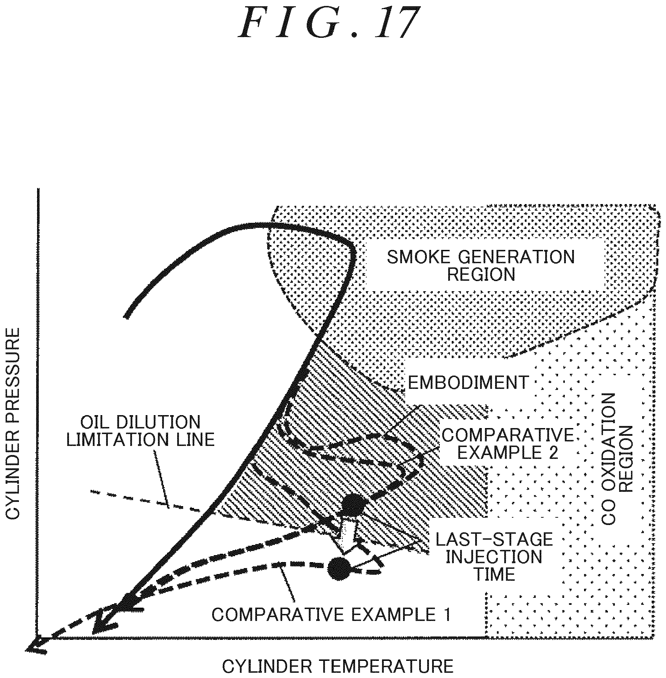

With the post injection as indicated in Comparative Example 1, the oil dilution is significantly increased. FIG. 17 shows change of the cylinder pressure with respect to the cylinder temperature over a period from the compression stroke to the expansions stroke. In the post injection of Comparative Example 1, since the injection amount of the post injection is rapidly increased, the last-stage injection time is also rapidly changed to the retard side. Therefore, as shown in FIG. 17, in a condition where the increase of the boost pressure is delayed due to delay in supercharging, the cylinder pressure does not rise sufficiently, and the injection time of the last-stage post injection falls in the oil dilution region.

Thus, in the post injection during acceleration, injection amount increase control for increasing the injection amount of post injection in a stepwise fashion according to increase of the boost pressure is considered. Namely, as indicated in the chart of the second section, an updated output value of the boost pressure sensor 34 increases stepwise for each control cycle in correspondence with increase of the boost pressure. Therefore, if the total injection amount is increased in a stepwise fashion in correspondence with the updated output value of the boost pressure sensor 34, rich combustion at a desired air-fuel ratio can be performed.

Here, when the injection amount of the post injection is increased, how the amount of increase in the total injection amount is to be imparted to the injection amounts of respective stages needs to be considered. Namely, under a transient condition where the increase of the boost pressure is delayed due to the delay in supercharging, the cylinder pressure does not rise to a sufficiently high level, resulting in a condition where penetration of fuel spray is strong. Therefore, if the injection amount of the middle-stage post injection and that of the last-stage post injection are equally increased, as in Comparative Example 2 indicated by dotted lines in the charts of the third to fifth sections in FIG. 16, the amount of fuel spray deposited on the wall surface during the last-stage post injection, in particular, is increased, and the oil dilution amount is increased.

Thus, in the system of this embodiment, when the injection amount of the post injection is increased, the injection amount of the middle-stage post injection is increased, before the injection amount of the last-stage post injection is increased. More specifically, as in the embodiment indicated by solid lines in the charts of the fourth and fifth sections in FIG. 16, the amount of increase in the total injection amount is entirely imparted to the middle-stage post injection, until the injection amount of the middle-stage post injection reaches a target value "$Q_{m,end}$", and then the amount of increase in the total injection amount is imparted to the last-stage post injection, after the injection amount of the middle-stage post injection reaches the target value "$Q_{m,end}$". As indicated in the chart of the third section in FIG. 16, the injection amount of the earliest-stage post injection is kept at a constant value "$Q_1$" without being increased. According to the post injection during acceleration as described above, it is possible to increase the injection amount of the post injection while effectively suppressing oil dilution.

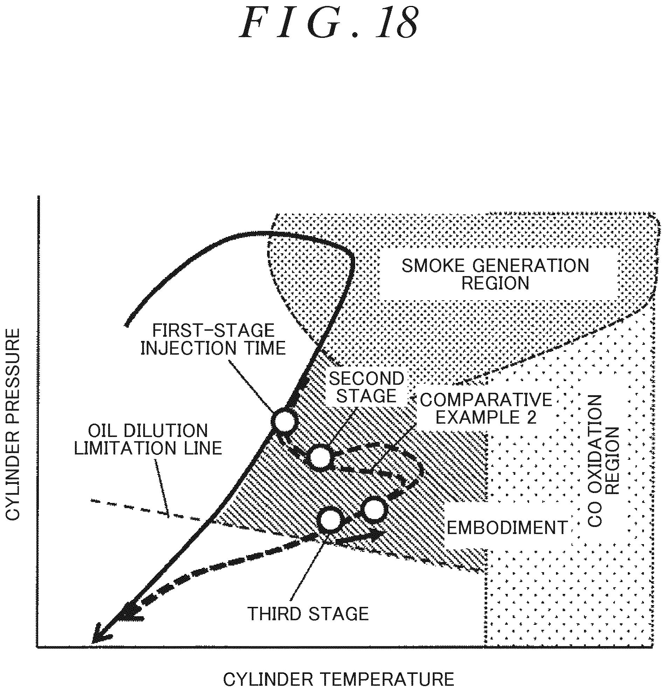

As indicated in the chart of the seventh section in FIG. 16, in the system of this embodiment, the injection time of the last-stage post injection is retarded in a stepwise fashion within a range in which the oil dilution can be suppressed. FIG. 18 shows change of the cylinder pressure with respect to the cylinder temperature over a period from the compression stroke to the expansion stroke. As shown in FIG. 18, in the injection pattern of the embodiment in which the injection amount of the middle-stage post injection is increased, the cylinder temperature and the cylinder pressure after the middle-stage post injection are higher than those in the injection pattern of Comparative Example 2. As a result, the actual time it takes until the operating state specified by the cylinder pressure and the cylinder temperature falls into the oil dilution region is prolonged, thus making it possible to retard the injection time of the last-stage post injection while suppressing the oil dilution. In determining the last-stage injection time, the degree of increase of the cylinder temperature according to the increases of the injection amounts of the middle-stage and last-stage post injections may be calculated, and the last-stage injection time may be retarded within a range in which the oil dilution does not occur, in view of evaporation characteristics of the fuel caused by the increase of the cylinder temperature.

2-2 Specific Processing of System of First Embodiment

Next, the specific processing performed by the system of the first embodiment will be described. FIG. 19 is a flowchart of a routine executed by the system of the first embodiment. The routine shown in FIG. 19 is repeatedly executed by the control device 30 during a period in which rich combustion caused by post injection is performed. At the start of this routine, the initial values of the earliest-stage, middle-stage, and last-stage injection amounts in the post injection are controlled to "$Q_1$", "$Q_{m,0}$", and "$Q_{L,0}$", respectively.

In the routine shown in FIG. 19, operating conditions of the engine 10, including the engine speed, engine load, intake air temperature, and the boost pressure, which are calculated from various sensor signals, are initially read (step S12). Then, a target value "$Q_{total,end}$" of the total injection amount of the post injection according to increase of required torque is calculated (step S14). Also, in this step, a target value "$Qi$" (constant value) of the earliest-stage post injection, target value "$Q_{m,end}$" of the middle-stage post injection, and a target value "$Q_{L,end}$" of the last-stage post injection are calculated, according to the map shown in FIG. 7.

Then, the injection amount "$Q_{m,i}$" of the middle-stage post injection and the injection amount "$Q_{L,i}$" of the last-stage post injection according to the i-th (i=1, 2, ...) updated output value of the boost pressure sensor 34 are calculated. Then, it is determined whether the calculated injection amount "$Q_{m,i}$" of the middle-stage post injection is smaller than the target value "$Q_{m,end}$" of the middle-stage post injection (step S16). If it is recognized that $Q_{m,i}$ is smaller than $Q_{m,end}$ ($Q_{m,i}<Q_{m,end}$), it is determined that the injection amount "$Q_{m,i}$" of the middle-stage post injection has not reached its target value, and the control proceeds to the next step. In the next step, the injection amount of the middle-stage post injection is increased, and the injection amount of the last-stage post injection is kept at "$Q_{L,0}$" as the initial value (step S18). More specifically, the injection amount "$Q'_{m,i}$" of the middle-stage post injection and the injection amount "$Q'_{L,i}$" of the last-stage post injection, after changed, are calculated based on the following equations (4) and (5).

$$Q'_{m,i}=Q_{m,i}+Q_{L,i}-Q_{L,i-1} \qquad (4)$$

$$Q'_{L,i}=Q_{L,0} \qquad (5)$$

On the other hand, if it is recognized that $Q_{m,i}$ is equal to $Q_{m,end}$ ($Q_{m,i}=Q_{m,end}$), it is determined that the injection amount "$Q_{m,i}$" of the middle-stage post injection has reached its target value, and the control proceeds to the next step. In the next step, the injection amount of the middle-stage post injection is kept at the target value "$Q_{m,end}$", and the injection amount of the last-stage post injection is increased (step S20). More specifically, the injection amount "$Q'_{m,i}$" of the middle-stage post injection and the injection amount "$Q'_{L,i}$" of the last-stage post injection, after changed, are calculated based on the following equations (6) and (7).

$$Q'_{m,i}=Q_{m,end} \qquad (6)$$

$$Q'_{L,i}=Q_{L,i}+Q_{m,end}-Q_{m,i} \qquad (7)$$

After the above step S18 or step S20 is executed, the injection time of each stage of post injection is calculated (step S22). More specifically, a retard amount that does not cause oil dilution is calculated, based on the increase of the cylinder temperature according to the increases of the injection amounts of the middle-stage and last-stage post injections. Then, the final injection time of each stage is calculated, by adding the retard amount to the injection time calculated according to the maps shown in FIG. 9 - FIG. 14. In the next step, the injection amount and injection time of each stage of post injection are changed to the values calculated in the above steps S18 and S20 (step S24).

Thus, according to the system of the first embodiment, in the post injection during acceleration, the injection amount of the middle-stage post injection is increased before the injection amount of the last-stage post injection is increased. Thus, even in a situation where the increase of the boost pressure is delayed due to the delay in supercharging, the oil dilution amount can be effectively suppressed or reduced.

In the system of the first embodiment as described above, when the injection amount of the post injection is increased during acceleration, the injection amount "$Q_{m,i}$" of the middle-stage post injection and the injection amount "$Q_{L,i}$" of the last-stage post injection are calculated in a stepwise fashion, based on the i-th (i=1, 2, ...) updated output value of the boost pressure sensor 34. However, the method of setting the injection amount of the post injection during acceleration is not limited to the method using the updated output value of the boost pressure sensor 34. For example, a map, or the like, may be used in which the upper limit of the post injection amount below which the amount of smoke generated falls within a permissible range is stored in association with operating conditions. More specifically, when the injection amount of the post injection is increased during acceleration, the injection amount of the middle-stage post injection is initially increased stepwise, within a range up to the upper limit specified by the above-indicated map, while the injection amount of the last-stage post injection is kept at the initial value "$Q_{L,0}$". Then, after the injection amount of the middle-stage post injection reaches the target value "$Q_{m,end}$", the injection amount of the last-stage post injection may be increased stepwise up to the target value "$Q_{L,end}$", within the range up to the upper limit specified by the map. With this arrangement, it is possible to set the injection amount of the post injection in a stepwise fashion according to operating conditions (namely, according to delay in supercharging), while suppressing generation of smoke.

In the system of the first embodiment as described above, the injection amount increase control corresponds to "post injection amount increasing means" according to the first invention, and the target value "$Q_{total,end}$" of the total injection amount corresponds to "target injection amount" according to the first invention, while the target value "$Q_{m,end}$" of the middle-stage post injection corresponds to "target value of the middle-stage post injection" according to the first invention. Also, in the system of the second embodiment as described above, the control device 30 executes the routine as shown in FIG. 19, thereby to realize "post injection control means" of the first invention.

3 Second Embodiment

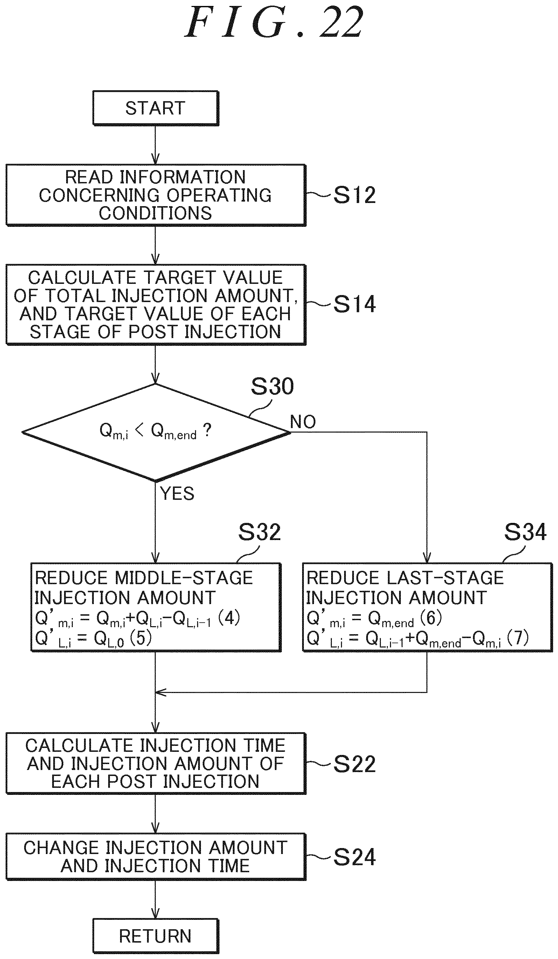

Next, a second embodiment of the invention will be described with reference to the drawings. The system of the second embodiment is realized by causing the control device 30 to execute a routine as shown in FIG. 22 (which will be described later), using hardware configuration similar to that of the example.

3-1 Operation of System of Second Embodiment

The system of the second embodiment is concerned with post injection during deceleration. Namely, since the boost pressure is reduced if a request for deceleration is generated during execution of post injection, the injection amount of the post injection needs to be reduced in accordance with reduction of the amount of air in the cylinder.

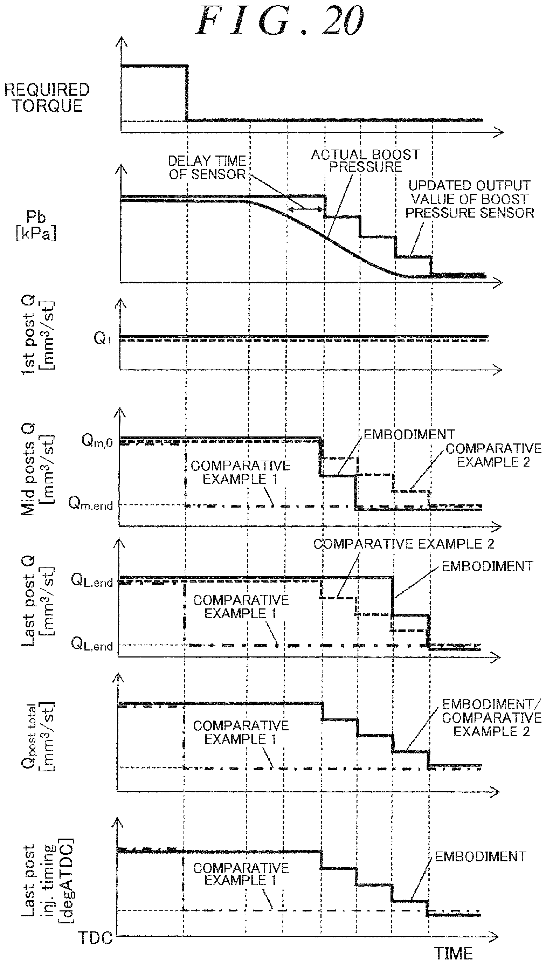

FIG. 20 is a time chart indicating various state quantities of post injection during deceleration. In FIG. 20, a chart of a first section (the uppermost section) indicates change of required torque with time, a chart of a second section indicates change of the boost pressure "Pb" with time, a chart of a third section indicates change of the injection amount "1st post Q" of the earliest-stage post injection with time, a chart of a fourth section indicates change of the injection amount "Mid posts Q" of the middle-stage post injection with time, a chart of a fifth section indicates change of the injection amount "Last post Q" of the last-stage post injection with time, a chart of a sixth section indicates change of the total injection amount "Qpost, total" of the post injection with time, and a chart of a seventh section (the lowermost section) indicates change of the injection time "Last post inj. timing" of the last-stage post injection with time.

As shown in the time chart of FIG. 20, in the post injection during deceleration, injection amount reduction control for reducing the injection amount of post injection in a stepwise fashion according to reduction of the boost pressure is considered. Namely, as indicated in the chart of the second section, the updated output value of the boost pressure sensor 34 decreases stepwise for each control cycle in correspondence with reduction of the boost pressure. Therefore, if the total injection amount is reduced in a stepwise fashion in correspondence with the updated output value of the boost pressure sensor 34, rich combustion can be performed at a desired air-fuel ratio even during deceleration.

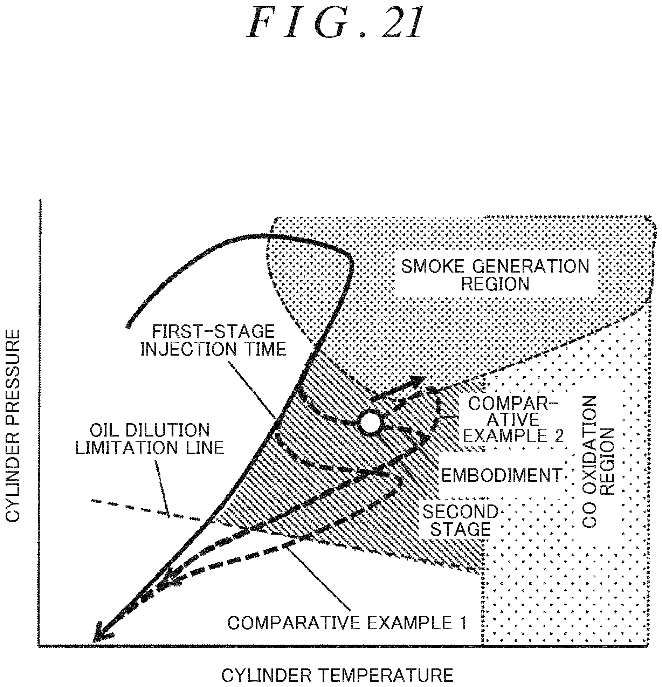

However, increase of the amount of smoke generated and increase of the oil dilution amount become problems, depending on setting of the reduction amount of each stage during deceleration. FIG. 21 shows change of the cylinder pressure with respect to the cylinder temperature over a period from the compression stroke to the expansion stroke. Comparative Example 1 shown in FIG. 21 corresponds to an injection pattern of Comparative Example 1 in FIG. 20. More specifically, Comparative Example 1 is an example of the case where the injection amounts of the middle-stage and last-stage post injections are reduced to their target values at a time, in response to reduction of the required torque. Comparative Example 2 shown in FIG. 21 corresponds to an injection pattern of Comparative Example 2 in FIG. 20. More specifically, Comparative Example 2 is an example of the case where the injection amounts of the middle-stage and last-stage post injections are reduced to their target values in a stepwise fashion, in response to reduction of the required torque.

When the required torque is reduced in a step in response to a deceleration request, release from the supercharged state is delayed, and the pressure in the cylinder remains high. Therefore, if the injection amount of the post injection is reduced at a time down to the target injection amount, in response to reduction of the required torque, as in Comparative Example 1, the amount of air in the cylinder becomes excessively large, and the exhaust air-fuel ratio turns into a lean air-fuel ratio. Also, as indicated in Comparative Example 2, in a condition where the cylinder pressure is high, the cylinder pressure further increases due to the middle-stage post injection, and the operating point is likely to enter a smoke generation region. In the meantime, the last-stage post injection is performed in a condition where the cylinder pressure is relatively high, the problem of the oil dilution amount is unlikely to be generated even if the injection amount is not immediately reduced.

Thus, in the system of this embodiment, when the injection amount of the post injection is reduced, the injection amount of the middle-stage post injection is reduced, before the injection amount of the last-stage post injection is reduced. More specifically, as in the embodiment indicated by solid lines in the charts of the fourth and fifth sections in FIG. 20, the amount of reduction of the total injection amount is entirely imparted to the middle-stage post injection, until the injection amount of the middle-stage post injection reaches a target value "$Q_{m,end}$", and the amount of reduction of the total injection amount is imparted to the last-stage post injection, after the injection amount of the middle-stage post injection is reduced down to the target value "$Q_{m,end}$". As indicated in the chart of the third section in FIG. 20, the injection amount of the earliest-stage post injection is kept at a constant value "Qi" without being reduced. According to the post injection during deceleration as described above, it is possible to reduce the injection amount of the post injection while suppressing generation of smoke.

As indicated in the chart of the seventh section in FIG. 20, in the system of this embodiment, the injection time of the last-stage post injection is advanced in a stepwise fashion within a range in which the oil dilution can be suppressed. At this time, it is possible to achieve both suppression of smoke generation and suppression of oil dilution, by setting the advance amount in a stepwise fashion within a range in which no oil dilution occurs.

3-2 Specific Processing of System of Second Embodiment

Next, the specific processing performed in the system of the second embodiment will be described. FIG. 22 is a flowchart of a routine executed by the system of the second embodiment. The routine shown in FIG. 22 is repeatedly executed by the control device 30, during a period in which rich combustion caused by post injection is performed. At the start of this routine, the initial values of the earliest-stage, middle-stage, and last-stage injection amounts in the post injection are controlled to "$Q_1$", "$Q_{m,0}$", and "$Q_{L,0}$", respectively.

In steps S12 and S14 of the routine shown in FIG. 22, substantially the same tasks as those of steps S12 and S14 of the routine shown in FIG. 19 are carried out. Then, the injection amount "$Q_{m,i}$" of the middle-stage post injection and the injection amount "$Q_{L,i}$" of the last-stage post injection according to the i-th (i=1, 2, ...) updated output value of the boost pressure sensor 34 are calculated. Then, it is determined whether the calculated injection amount "$Q_{m,i}$" of the middle-stage post injection is larger than the target value "$Q_{m,end}$" of the middle-stage post injection (step S30). If it is recognized that $Q_{m,i}$ is larger than $Q_{m,end}$ ($Q_{m,i}>Q_{m,end}$), it is determined that the injection amount "$Q_{m,i}$" of the middle-stage post injection has not reached its target value, and the control proceeds to the next step. In the next step, the injection amount of the middle-stage post injection is reduced, and the injection amount of the last-stage post injection is kept at "$Q_{L,0}$" as the initial value (step S32). Specifically, the injection amount "$Q'_{m,i}$" of the middle-stage post injection and the injection amount "$Q'_{L,i}$" of the last-stage post injection, after changed, are calculated based on the above-indicated equations (4) and (5).

On the other hand, if it is recognized that $Q_{m,i}$ is equal to $Q_{m,end}$ ($Q_{m,i}=Q_{m,end}$), it is determined that the injection amount "$Q_{m,i}$" of the middle-stage post injection has reached the target value, and the control proceeds to the next step. In the next step, the injection amount of the middle-stage post injection is kept at the target value "$Q_{m,end}$", and the injection amount of the last-stage post injection is reduced (step S34). Specifically, the injection amount "$Q'_{m,i}$" of the middle-stage post injection and the injection amount "$Q'_{L,i}$" of the last-stage post injection, after changed, are calculated based on the above-indicated equations (6) and (7). After the above steps S32 and S34 are executed, substantially the same tasks as those of steps S12 and S14 of the routine shown in FIG. 19 are carried out, and the current cycle of this routine ends.

Thus, according to the system of the second embodiment, in the post injection during deceleration, the injection amount of the middle-stage post injection is reduced before the injection amount of the last-stage post injection is reduced; therefore, even in a situation where reduction of the boost pressure is delayed due to the delay in release from the supercharged state, it is possible to effectively suppress generation of smoke.

In the system of the second embodiment as described above, when the injection amount of the post injection is reduced during deceleration, the injection amount "$Q_{m,i}$" of the middle-stage post injection and the injection amount "$Q_{L,i}$" of the last-stage post injection are calculated in a stepwise fashion, based on the i-th (i=1, 2, ...) updated output value of the boost pressure sensor 34. However, the method of setting the injection amount of the post injection during deceleration is not limited to the method using the updated output value of the boost pressure sensor 34. For example, a map, or the like, may be used in which the lower limit of the post injection amount above which a shortage of torque due to the delay in release from the supercharged state during deceleration falls within a permissible range is stored in association with operating conditions. More specifically, when the injection amount of the post injection is reduced during deceleration, the injection amount of the middle-stage post injection is initially reduced in a stepwise fashion, within a range down to the lower limit specified by the above-indicated map, while the injection amount of the last-stage post injection is kept at the initial value "$Q_{L,0}$". Then, after the injection amount of the middle-stage post injection is reduced down to the target value "$Q_{m,end}$", the injection amount of the last-stage post injection may be reduced stepwise down to the target value "$Q_{L,end}$" within a range down to the lower limit specified by the map. With this arrangement, it is possible to set the injection amount of the post injection in a stepwise fashion according to operating conditions (namely, according to the delay in release from the supercharged state), while curbing a shortage of torque.

In the system of the second embodiment as described above, the injection amount reduction control corresponds to "post injection amount reducing means" according to the sixth invention, and the target value "$Q_{total,end}$" of the total injection amount corresponds to "target injection amount" according to the sixth invention, while the target value "$Q_{m,end}$" of the middle-stage post injection corresponds to "target value of the middle-stage post injection" according to the sixth invention. Also, in the system of the second embodiment as described above, the control device 30 executes the routine as shown in FIG. 22, thereby to realize "post injection control means" of the sixth invention.

4 Third Embodiment

Next, a third embodiment of the invention will be described with reference to the drawings.

4-1 Characteristic Operation of System of Third Embodiment

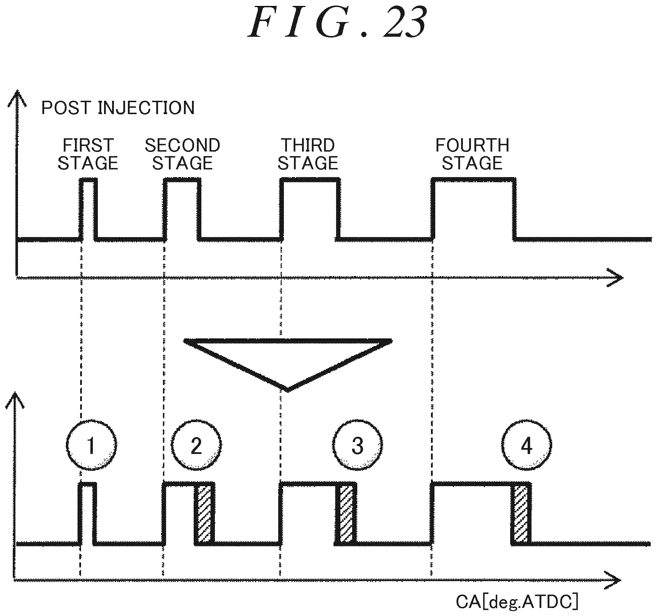

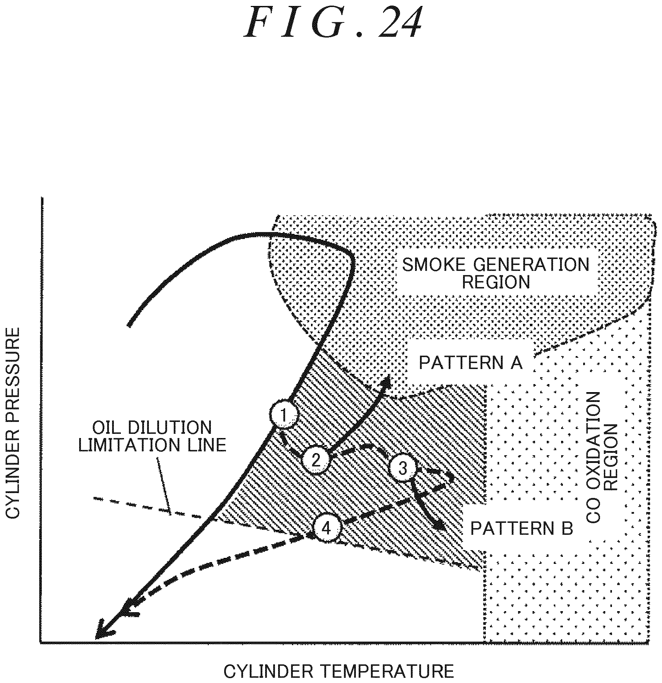

A system of the third embodiment is characterized in operation to change the order of increase of the injection amount according to an engine load condition of the engine 10, when the injection amounts of two or more middle-stage post injections are increased, in post injection during acceleration. FIG. 23 is a view useful for explaining the order of increase of the injection amount when injection amount increase control is performed in four-stage post injection. FIG. 24 is a view showing change of the cylinder pressure with respect to the cylinder temperature over a period from the compression stroke to the expansion stroke. The circled numbers 1 to 4 in FIG. 24 correspond to the first-stage post injection to the fourth-stage post injection indicated in FIG. 23, respectively. As shown in FIG. 23, under the injection amount increase control in the system of the third embodiment, the injection amount of the earliest-stage ("FIRST STAGE" in FIG. 23) post injection is not increased, and the injection amounts of the middle-stage ("SECOND STAGE" and "THIRD STAGE" in FIG. 23) post injections and the last-stage ("FOURTH STAGE" in FIG. 23) post injection are increased. Under the injection amount increase control of this system, the injection amounts of the middle-stage post injections are increased before the injection amount of the last-stage post injection is increased, in order to suppress oil dilution, in a manner similar to the injection amount increase control of the system of the first embodiment.

In the injection pattern of the post injection as shown in FIG. 23, there are two or more stages as the middle-stage post injections. Therefore, as the order of increase of the injection amount of the post injection, pattern A and pattern B are considered. In pattern A, the injection amount of the earlier stage of the middle-stage post injections is increased first, and that of the later stage is then increased, such that the order of increase of the injection amount is second stage → third stage → fourth stage. In pattern B, the injection amount of the later stage of the middle-stage post injections is increased first, and that of the earlier stage is then increased, such that the order of increase of the injection amount is third stage → second stage → fourth stage. According to the order of increase in pattern A, the injection amount is sequentially increased from the earlier-stage post injection (namely, post injection under the higher cylinder pressure), which is advantageous in terms of suppression of oil dilution, but is disadvantageous in terms of suppression of smoke generation. On the other hand, according to the order of increase in pattern B, the injection amount is increased from the later-stage post injection (namely, post injection under the lower cylinder pressure), which is advantageous in terms of suppression of smoke generation, but is disadvantageous in terms of suppression of oil dilution.

In this connection, the degree of increase of the cylinder pressure with respect to the injection amount of the post injection becomes larger as the engine load is higher. Therefore, suppression of smoke generation is more highly requested as the engine load is higher, and suppression of oil dilution is more highly requested as the engine load is lower. It is, however, to be noted that smoke generated is re-burned in a region where the engine load is high; therefore, in the high-load region, suppression of smoke generation is not requested, but rather suppression of oil dilution is requested.

Thus, in the system of the third embodiment, the injection amount is increased in the order of the above-indicated pattern A when the engine load is a low load and a high load, and the injection amount is increased in the order of the above-indicated pattern B when the engine load is a middle load. With this arrangement, suppression of oil dilution and suppression of smoke generation can be both achieved, irrespective of the engine load condition of the engine 10.

In the system of the third embodiment as described above, in the post injection during acceleration, the order of increase of the injection amount in the middle-stage post injections is changed according to the engine load condition of the engine 10. This control may also be applied to the case where the injection amount is reduced in the post injection during deceleration. Namely, under the injection amount reduction control for the post injection during deceleration, the injection amounts of the middle-stage post injections are reduced in order of second stage → third stage, and the injection amount of the fourth-stage (last-stage) post injection is reduced in the last place. This order of reduction of the injection amount, which will be called "pattern C", is advantageous in terms of suppression of smoke generation. Alternatively, the injection amounts of the middle-stage post injections are reduced in order of third stage → second stage, and the injection amount of the fourth-stage (last-stage) post injection is reduced in the last place. This order of reduction of the injection amount, which will be called "pattern D", is advantageous in terms of suppression of oil dilution. Thus, the injection amount is reduced in the order of the above pattern D when the engine load is a low load and a high load, and the injection amount is reduced in the order of the above pattern C when the engine load is a middle load. With this arrangement, suppression of oil dilution and suppression of smoke generation can be both achieved, irrespective of the engine load condition of the engine 10.

Next, a fourth embodiment of the invention will be described with reference to the drawings.

5-1 Characteristic Operation of System of Fourth Embodiment

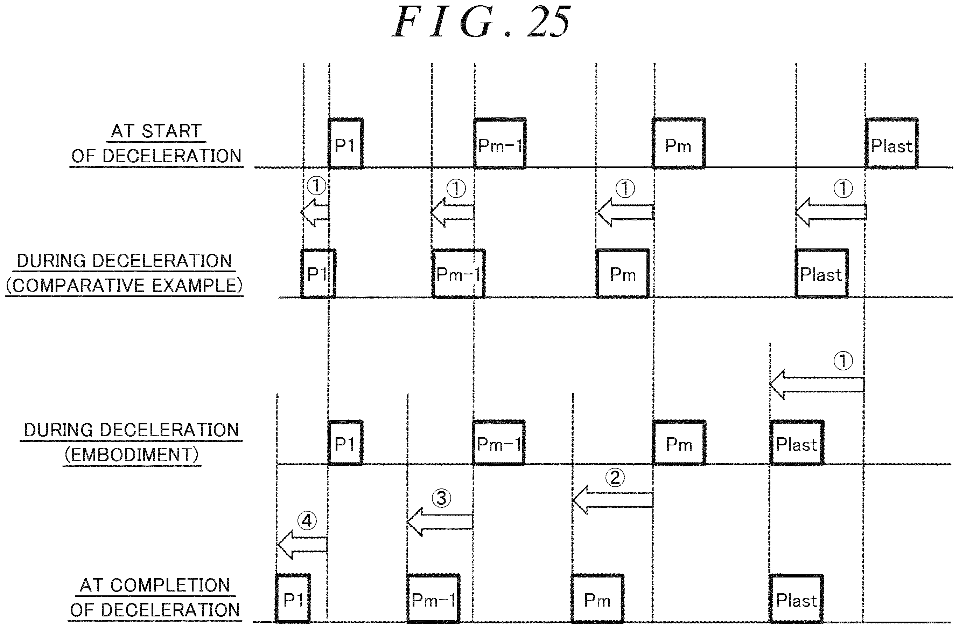

A system of the fourth embodiment is characterized in the configuration of injection time advancing means for sequentially changing the injection times of two or more stages of post injections to target values on the advance side, starting with the injection time of the last-stage post injection, in post injection during deceleration. FIG. 25 is a view useful for explaining operation to change the injection times in the post injection during deceleration. In FIG. 25, a chart of a first section (the uppermost section) indicates the injection times at the start of deceleration, a chart of a second section indicates a comparative example of the operation to change the injection times of post injection during deceleration, a chart of a third section indicates an example of operation to change the injection times of post injection during deceleration, in the system of the fourth embodiment, and a chart of a fourth section indicates the injection times at the completion of deceleration. In FIG. 25, Pm (m=1, 2, ..., last) indicates the m-th post injection.

In the chart of the comparative example shown in the second section of FIG. 25, all of the injection times of the plural-stage post injections are advanced at the same time during deceleration. Since release from the supercharged state is largely delayed in the initial period of deceleration, excess air is present in the cylinder. Therefore, if the injection time of the earlier-stage post injection under a high cylinder pressure in the initial period of deceleration is advanced, torque is generated due to combustion, and the amount of smoke generated is increased.

On the other hand, in the system of the fourth embodiment, the injection time of the last-stage post injection (Plast in the example of FIG. 25) is advanced first during deceleration. Then, once the injection time of the last-stage post injection is advanced to its target value, the injection time of the previous-stage post injection (Pm in the example of FIG. 25) is advanced to its target value. This operation is repeated until the injection time of the earliest-stage post injection (PI in the example of FIG. 25) is advanced. As the stage of post injection is later, an influence of change of the injection time on smoke generation is smaller. Therefore, according to the system of the fourth embodiment, it is possible to advance the injection time of post injection while suppressing generation of smoke.

In the system of the fourth embodiment as described above, the operation in the case where the injection time of post injection is advanced during deceleration has been described. However, the operation may be applied to the configuration of injection time retarding means for retarding the injection time of post injection during acceleration. Namely, in the initial period of acceleration, the cylinder pressure does not rise to a sufficiently high level due to a large influence of delay in supercharging. Therefore, if the injection time of the later-stage post injection is retarded in the initial period of acceleration, the oil dilution amount is increased. Thus, when the injection time of post injection is retarded during acceleration, the injection time may be sequentially retarded, starting with that of the earliest-stage post injection that has the smallest influence on oil dilution. Thus, it is possible to retard the injection time of the post injection while suppressing oil dilution.

Also, in the system of the fourth embodiment as described above, in the post injection during deceleration, the injection time is sequentially advanced to the target value, starting with that of the last-stage post injection. However, since the influence of the delay in release from the supercharged state is large in the initial period of deceleration, the injection time of at least the last-stage post injection is initially advanced to the target value, and then the injection times of the remaining post injections may be advanced at the same time. This modification may also be applied to the post injection during acceleration. In this case, the injection time of at least the earliest-stage post injection is initially retarded to the target value, and then the injection times of the remaining post injections may be retarded at the same time.

Next, a fifth embodiment of the invention will be described with reference to the drawings.

When the post injection is multistaged, the interval between post injections of each pair of adjacent stages is set to a value larger than the minimum interval that is determined from hardware restrictions of the fuel injection valve 12, etc. However, in the post injection during deceleration, if the injection time is sequentially advanced to its target value, starting with that of the last-stage post injection, the interval between the last-stage post injection and the previous-stage post injection may be reduced to be smaller than the minimum interval.

Thus, in the system of the fifth embodiment, in the post injection during deceleration, when the interval between the post injection whose injection time is to be changed and the previous-stage post injection becomes equal to the minimum interval while the injection time of the post injection in question is being advanced to the target value, the injection time of the previous-stage post injection is also advanced at the same time so that the minimum interval is maintained.

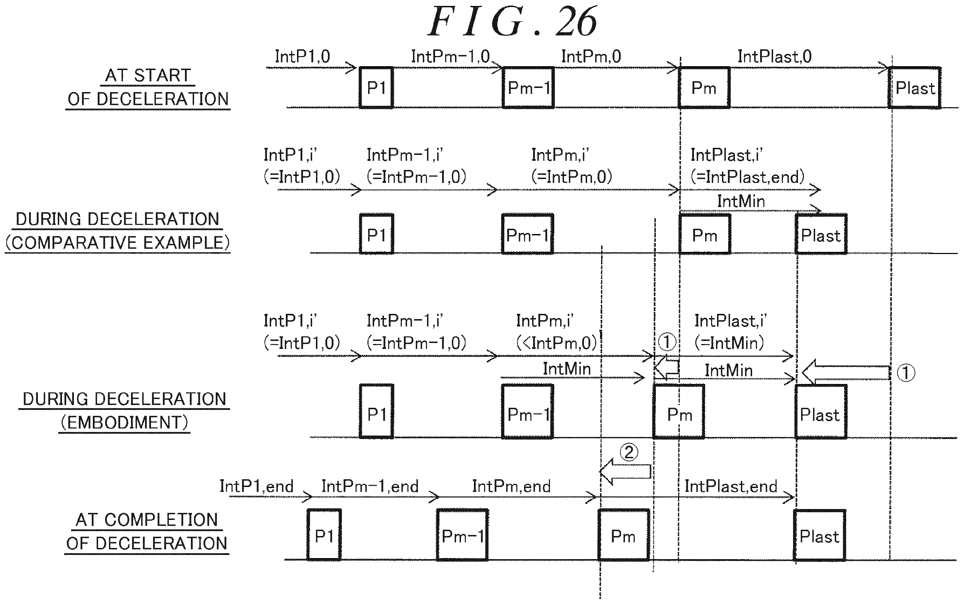

FIG. 26 is a view useful for explaining operation to change the injection timing of post injection during deceleration. In FIG. 26, a chart of a first section (the uppermost section) indicates the injection time and interval of each stage of post injection at the start of deceleration, a chart of a second section indicates a comparative example of operation to change the injection timing of post injection during deceleration, a chart of a third section indicates an example of operation to change the injection timing of post injection during deceleration in the system of the fifth embodiment, and a chart of a fourth section indicates the injection timing at the completion of deceleration. In FIG. 26, P1 indicates the earliest-stage (first-stage) post injection, Pm-1 indicates a middle-stage (m-1th-stage) post injection, Pm indicates another middle-stage (m-th stage) post injection, and Plast indicates the last-stage post injection. Also, in FIG. 26, IntPm,i (m=1, 2, ..., last; i=0, 1, ..., end) indicates the interval on the earlier stage side of the m-th post injection in the i-th cycle after deceleration is started, and IntMin indicates the minimum interval.

In the chart of the comparative example shown in the second section of FIG. 26, when the injection time of the last-stage post injection (Plast) is advanced during deceleration, the interval "IntPlast,i" between the last-stage post injection (Plast) and the previous-stage post injection (Pm) is reduced to be smaller than the minimum interval "IntMin". Therefore, with the control of the comparative example, desired post injection cannot be realized. On the other hand, in the example of the system of the fifth embodiment shown in the third section, when the interval "IntPlast,i" between the last-stage post injection (Plast) and the previous-stage post injection (Pm) is reduced to the minimum interval "IntMin" while the injection time of the last-stage post injection (Plast) is being advanced to the target value during deceleration, the injection time of the previous-stage post injection (Pm) is advanced at the same time so that the minimum interval "IntMin" is maintained. Then, the injection time of the previous-stage post injection (Pm) is advanced to the target value in the next cycle. If the interval "IntPm,i" between the post injection (Pm) and the previous-stage post injection (Pm-1) is reduced to the minimum interval "IntMin" while the injection time of the post injection (Pm) is being advanced, the injection time of the previous-stage post injection (Pm-1) is advanced at the same time so that the minimum interval "IntMin" is maintained, as in the above operation. With this operation repeatedly carried out, it is possible to sequentially advance the injection time of post injection while maintaining the minimum interval.

In the system of the fifth embodiment as described above, the operation in the case where the injection time is advanced in post injection during deceleration has been described. However, the operation that can be performed in the system of the fifth embodiment is not limited to this, but the above operation may be applied to the case where the injection time is retarded in post injection during acceleration. Namely, as described above, in the post injection during acceleration, the injection time is sequentially retarded, starting with that of the earliest-stage post injection. Therefore, when the interval between a post injection (Pm) and a subsequent-stage post injection (Pm+1) is reduced to the minimum interval while the injection time of the post injection (Pm) is being retarded, the injection time of the subsequent-stage post injection (Pm+1) may be retarded at the same time so that the minimum interval is maintained, in the same manner as the above operation.

## Claims

1. A control device of an internal combustion engine, the internal combustion engine including a fuel injection device (12) that injects fuel into a cylinder, comprising:
   an electronic control unit (30) configured to:

   control the fuel injection device (12) so as to perform post injection comprising multistage post injections, on an expansion stroke of the internal combustion engine after combustion caused by main injection; and
   control the fuel injection device (12) such that an injection amount of an earliest-stage post injection as one of the multistage post injections is smaller than the injection amount of each of subsequent-stage post injections that follow the earliest-stage post injection, **characterized in that**,
   the electronic control unit (30) is configured to control the fuel injection device (12), so as to perform at least three-stage post injections comprising the earliest-stage post injection, a last-stage post injection, and a middle-stage post injection between the earliest-stage post injection and the last-stage post injection;
   the electronic control unit (30) is configured to set a target injection amount based on which the injection amounts of the middle-stage post injection and the last-stage post injection are increased according to an acceleration request, when the acceleration request is generated to the internal combustion engine; and
   the electronic control unit (30) is configured to control the fuel injection device (12) so as to increase the injection amount of the middle-stage post injection before increasing the injection amount of the last-stage post injection, according to operating conditions of the internal combustion engine, when the acceleration request is generated to the internal combustion engine, and increase the injection amount of the last-stage post injection, after the injection amount of the middle-stage post injection is increased to a target value of the middle-stage post injection which is determined according to the target injection amount.

2. The control device according to claim 1, wherein the electronic control unit (30) is configured to obtain stepwise varying detection values of a boost pressure sensor that detects the boost pressure of the internal combustion engine, as an operating condition of the internal combustion engine, and control the fuel injection device (12) so as to increase the injection amounts of the middle-stage post injection and the last-stage post injection in a stepwise fashion, based on the obtained detection values.

3. The control device according to claim 1 or 2, wherein:

   the electronic control unit (30) is configured to control the fuel injection device (12) so as to perform a plurality of stages of post injections as the middle-stage post injection; and
   the electronic control unit (30) is configured to control the fuel injection device (12) so as to sequentially increase the injection amounts of the plurality of stages of post injections as the middle-stage post injection, starting with an earlier-stage post injection, according to the operating conditions of the internal combustion engine, when an engine load is a low load or a high load, and sequentially increase the injection amounts of the plurality of stages of post injections as the middle-stage post injection, starting with a later-stage post injection, according to the operating conditions of the internal combustion engine, when the engine load is a middle load.

4. The control device according to any one of claims 1 to 3, wherein:

the electronic control unit (30) is configured to control the fuel injection device (12) so as to change injection timing of the post injection to a retard side, when an acceleration request is generated to the internal combustion engine; and

the electronic control unit (30) is configured to control the fuel injection device (12) so as to change an injection time of the earliest-stage post injection to the retard side, before changing the injection times of the middle-stage post injection and the last-stage post injection to the retard side, when the acceleration request is generated to the internal combustion engine.

5. The control device according to claim 4, wherein, when the injection timing of the post injection is changed to the retard side, and an interval between a given stage of the post injection whose injection time is to be changed and a subsequent-stage post injection becomes smaller than a predetermined minimum interval, the electronic control unit (30) is configured to control the fuel injection device (12) so as to change the injection time of the subsequent-stage post injection to the retard side as well as that of the given stage of the post injection, so that the minimum interval is maintained.

6. A control device of an internal combustion engine, the internal combustion engine including a fuel injection device (12) that injects fuel into a cylinder, comprising:
an electronic control unit (30) configured to:

control the fuel injection device (12) so as to perform post injection comprising multistage post injections, on an expansion stroke of the internal combustion engine after combustion caused by main injection; and
control the fuel injection device (12) such that an injection amount of an earliest-stage post injection as one of the multistage post injections is smaller than the injection amount of each of subsequent-stage post injections that follow the earliest-stage post injection, **characterized in that**,
the electronic control unit (30) is configured to control the fuel injection device (12), so as to perform at least three-stage post injections comprising the earliest-stage post injection, a last-stage post injection, and a middle-stage post injection between the earliest-stage post injection and the last-stage post injection;
the electronic control unit (30) is configured to set a target injection amount based on which the injection amounts of the middle-stage post injection and the last-stage post injection are reduced according to a deceleration request, when the deceleration request is generated to the internal combustion engine; and
the electronic control unit (30) is configured to control the fuel injection device (12) so as to reduce the injection amount of the middle-stage post injection before reducing the injection amount of the last-stage post injection, according to operating conditions of the internal combustion engine, when the deceleration request is generated to the internal combustion engine, and reduce the injection amount of the last-stage post injection, after the injection amount of the middle-stage post injection is reduced to a target value of the middle-stage post injection which is determined according to the target injection amount.

7. The control device according to claim 6, wherein the electronic control unit (30) is configured to obtain stepwise varying detection values of a boost pressure sensor that detects the boost pressure of the internal combustion engine, as an operating condition of the internal combustion engine, and control the fuel injection device (12) so as to reduce the injection amounts of the middle-stage post injection and the last-stage post injection in a stepwise fashion, based on the obtained detection values.

8. The control device according to claim 6 or 7, wherein:

the electronic control unit (30) is configured to control the fuel injection device (12) so as to change injection timing of the post injection to an advance side, when a deceleration request is generated to the internal combustion engine; and
the electronic control unit (30) is configured to control the fuel injection device (12) so as to change an injection time of the last-stage post injection to the advance side, before changing the injection times of the middle-stage post injection and the earliest-stage post injection to the advance side, when the deceleration request is generated to the internal combustion engine.

9. The control device according to claim 8, wherein:

the electronic control unit (30) is configured to control the fuel injection device (12) so as to perform a plurality of stages of post injections as the middle-stage post injection; and
the electronic control unit (30) is configured to control the fuel injection device (12) so as to sequentially reduce the injection amounts of the plurality of stages of post injections as the middle-stage post injection, starting with a later-stage post injection, according to the operating conditions of the internal combustion engine, when an engine load is a low load or a high load, and sequentially reduce the injection amounts of the plurality of stages of post injections as the middle-stage post injection, starting with an earlier-stage post injection, according to the operating conditions of the internal combustion engine, when the engine load is a middle load.

10. The control device according to claim 8 or claim 9, wherein, when the injection timing of the post injection is changed to the advance side, and an interval between a given stage of the post injection whose injection time is to be changed and a previous-stage post injection becomes smaller than a predetermined minimum interval, the electronic control unit (30) is configured to control the fuel injection device (12) so as to change the injection time of the previous-stage post injection to the advance side as well as that of the given stage of the post injection, so that the minimum interval is maintained.

11. The control device according to any one of claims 1 to 10, wherein:

the internal combustion engine includes a NOx storage reduction catalyst (18) disposed in an exhaust passage of the internal combustion engine; and
the electronic control unit (30) is configured to control the fuel injection device (12) so as to perform the post injection, when NOx stored in the NOx storage reduction catalyst (18) reaches a predetermined storage limit amount.

12. The control device according to any of claims 1 to 11, wherein the electronic control unit (30) is configured to control the fuel injection device (12), such that the injection amount of each stage of the post injection is larger as the stage is later.

13. The control device according to any of claims 1 to 12, wherein the electronic control unit (30) is configured to control the fuel injection device (12) by setting a start time of the post injection according to an engine load and an engine speed of the internal combustion engine.

14. The control device according to claim 13, wherein the electronic control unit (30) is configured to control the fuel injection device (12) by correcting the start time of the post injection based on a boost pressure and/or an intake air temperature of the internal combustion engine.

15. The control device according to any one of claims 1 to 14, wherein the electronic control unit (30) is configured to control the fuel injection device (12), by setting an ending time of the post injection according to an engine load and an engine speed of the internal combustion engine.

16. The control device according to claim 15, wherein the electronic control unit (30) is configured to control the fuel injection device (12), by correcting the ending time of the post injection based on a relationship between a boost pressure and a fuel injection pressure of the internal combustion engine and/or based on an intake air temperature of the internal combustion engine.

**Patentansprüche**

1. Steuervorrichtung eines Verbrennungsmotors, der eine Kraftstoffeinspritzvorrichtung (12), die Kraftstoff in einen Zylinder einspritzt, enthält, mit einer elektronischen Steuereinheit (30), die konfiguriert ist, um:

die Kraftstoffeinspritzvorrichtung (12) so zu steuern, dass sie bei einem Expansionstakt des Verbrennungsmotors nach einer durch eine Haupteinspritzung hervorgerufenen Verbrennung eine Nacheinspritzung mit mehreren Nacheinspritzungsstufen ausführt; und
die Kraftstoffeinspritzvorrichtung (12) so zu steuern, dass eine Einspritzmenge einer frühesten Nacheinspritzungsstufe, als eine der mehreren Nacheinspritzungsstufen, kleiner ist als die Einspritzmenge von jeder darauffolgenden Nacheinspritzungsstufe, die der frühesten Nacheinspritzungsstufe folgen,
**dadurch gekennzeichnet, dass**
die elektronische Steuereinheit (30) konfiguriert ist, um die Kraftstoffeinspritzvorrichtung (12) so zu steuern, dass sie mindestens drei Nacheinspritzungsstufen ausführt, die die früheste Nacheinspritzungsstufe, eine letzte Nacheinspritzungsstufe und eine mittlere Nacheinspritzungsstufe zwischen der frühesten Nacheinspritzungsstufe und der letzten Nacheinspritzungsstufe beinhalten;

die elektronische Steuereinheit (30) konfiguriert ist, um eine Soll-Einspritzmenge festzulegen, auf deren Grundlage die Einspritzmengen der mittleren Nacheinspritzungsstufe und der letzten Nacheinspritzungsstufe entsprechend einer Beschleunigungsforderung erhöht werden, wenn die Beschleunigungsforderung an den Verbrennungsmotor gestellt wird; und

die elektronische Steuereinheit (30) konfiguriert ist, um die Kraftstoffeinspritzvorrichtung (12) so zu steuern, dass sie die Einspritzmenge der mittleren Nacheinspritzungsstufe gemäß den Betriebsbedingungen des Verbrennungsmotors erhöht, bevor sie die Einspritzmenge der letzten Nacheinspritzungsstufe erhöht, wenn die Beschleunigungsforderung an den Verbrennungsmotor gestellt wird, und dass sie die Einspritzmenge der letzten Nacheinspritzungsstufe erhöht, nachdem die Einspritzmenge der mittleren Nacheinspritzungsstufe auf einen der Soll-Einspritzmenge entsprechend festgelegten Sollwert der mittleren Nacheinspritzungsstufe erhöht worden ist.

2. Steuervorrichtung nach Anspruch 1, wobei die elektronische Steuereinheit (30) konfiguriert ist, um schrittweise veränderliche Erfassungswerte eines Ladedrucksensors zu erhalten, der den Ladedruck des Verbrennungsmotors als einen Betriebszustand des Verbrennungsmotors erfasst, und die Kraftstoffeinspritzvorrichtung (12) so zu steuern, dass sie die Einspritzmengen der mittleren Nacheinspritzungsstufe und der letzten Nacheinspritzungsstufe basierend auf den erhaltenen Erfassungswerten schrittweise erhöht.

3. Steuervorrichtung nach Anspruch 1 oder 2, wobei:

die elektronische Steuereinheit (30) konfiguriert ist, um die Kraftstoffeinspritzvorrichtung (12) so zu steuern, dass sie mehrere Nacheinspritzungsstufen als die mittlere Nacheinspritzungsstufe ausführt; und

die elektronische Steuereinheit (30) konfiguriert ist, um die Kraftstoffeinspritzvorrichtung (12) so zu steuern, dass sie beginnend mit einer früheren Nacheinspritzungsstufe nacheinander die Einspritzmengen der mehreren Nacheinspritzungsstufen als die mittlere Nacheinspritzungsstufe gemäß den Betriebsbedingungen des Verbrennungsmotors erhöht, wenn eine Motorlast eine niedrige Last oder eine hohe Last ist, und dass sie beginnend mit einer späteren Nacheinspritzungsstufe die Einspritzmengen der mehreren Nacheinspritzungsstufen als die mittlere Nacheinspritzungsstufe gemäß den Betriebsbedingungen des Verbrennungsmotors erhöht, wenn die Motorlast eine mittlere Last ist.

4. Steuervorrichtung nach einem der Ansprüche 1 bis 3, wobei:

die elektronische Steuereinheit (30) konfiguriert ist, um die Kraftstoffeinspritzvorrichtung (12) so zu steuern, dass sie einen Einspritzzeitpunkt der Nacheinspritzung weiter nach hinten verlegt, wenn eine Beschleunigungsforderung an den Verbrennungsmotor gestellt wird; und

die elektronische Steuereinheit (30) konfiguriert ist, um die Kraftstoffeinspritzvorrichtung (12) so zu steuern, dass sie einen Einspritzzeitpunkt der frühesten Nacheinspritzungsstufe weiter nach hinten verlegt, bevor sie die Einspritzzeitpunkte der mittleren Nacheinspritzungsstufe und der letzten Nacheinspritzungsstufe weiter nach hinten verlegt, wenn die Beschleunigungsforderung an den Verbrennungsmotor gestellt wird.

5. Steuervorrichtung nach Anspruch 4, wobei, wenn der Einspritzzeitpunkt der Nacheinspritzung weiter nach hinten verlegt wird und ein Zeitraum zwischen einer bestimmten Nacheinspritzungsstufe, deren Einspritzzeitpunkt geändert werden soll, und einer darauffolgenden Nacheinspritzungsstufe kleiner als ein vorbestimmter Minimalzeitraum wird, die elektronische Steuereinheit (30) konfiguriert ist, um die Kraftstoffeinspritzvorrichtung (12) so zu steuern, dass sie den Einspritzzeitpunkt der darauffolgenden Nacheinspritzungsstufe sowie den Einspritzzeitpunkt der bestimmten Nacheinspritzungsstufe weiter nach hinten verlegt, so dass der Minimalzeitraum eingehalten wird.

6. Steuervorrichtung eines Verbrennungsmotors, der eine Kraftstoffeinspritzvorrichtung (12), die Kraftstoff in einen Zylinder einspritzt, enthält, mit einer elektronischen Steuereinheit (30), die konfiguriert ist, um:

die Kraftstoffeinspritzvorrichtung (12) so zu steuern, dass sie bei einem Expansionstakt des Verbrennungsmotors nach einer durch eine Haupteinspritzung hervorgerufenen Verbrennung eine Nacheinspritzung mit mehreren Nacheinspritzungsstufen ausführt; und

die Kraftstoffeinspritzvorrichtung (12) so zu steuern, dass eine Einspritzmenge einer frühesten Nacheinspritzungsstufe, als eine mehreren Nacheinspritzungsstufen, kleiner ist als die Einspritzmenge von jeder darauffolgenden Nacheinspritzungsstufe, die der frühesten Nacheinspritzungsstufe folgen,

**dadurch gekennzeichnet, dass**,

die elektronische Steuereinheit (30) konfiguriert ist, um die Kraftstoffeinspritzvorrichtung (12) so zu steuern, dass sie mindestens drei Nacheinspritzungsstufen ausführt, die die früheste Nacheinspritzungsstufe, eine letzte Nacheinspritzungsstufe und eine mittlere Nacheinspritzungsstufe zwischen der frühesten Nacheinspritzungsstufe und der letzten Nacheinspritzungsstufe beinhalten;

die elektronische Steuereinheit (30) konfiguriert ist, um eine Soll-Einspritzmenge festzulegen, auf deren Grundlage die Einspritzmengen der mittleren Nacheinspritzungsstufe und der letzten Nacheinspritzungsstufe entsprechend einer Bremsforderung reduziert werden, wenn die Bremsforderung an den Verbrennungsmotor gestellt wird; und

die elektronische Steuereinheit (30) konfiguriert ist, um die Kraftstoffeinspritzvorrichtung (12) so zu steuern, dass sie die Einspritzmenge der mittleren Nacheinspritzungsstufe gemäß den Betriebsbedingungen des Verbrennungsmotors reduziert, bevor sie die Einspritzmenge der letzten Nacheinspritzungsstufe reduziert, wenn die Bremsforderung an den Verbrennungsmotor gestellt wird, und dass sie die Einspritzmenge der letzten Nacheinspritzungsstufe reduziert, nachdem die Einspritzmenge der mittleren Nacheinspritzungsstufe auf einen der der Soll-Einspritzmenge entsprechend festgelegten Sollwert der mittleren Nacheinspritzungsstufe reduziert worden ist.

7. Steuervorrichtung nach Anspruch 6, wobei die elektronische Steuereinheit (30) konfiguriert ist, um schrittweise veränderliche Erfassungswerte eines Ladedrucksensors zu erhalten, der den Ladedruck des Verbrennungsmotors als einen Betriebszustand des Verbrennungsmotors erfasst, und die Kraftstoffeinspritzvorrichtung (12) so zu steuern, dass sie die Einspritzmengen der mittleren Nacheinspritzungsstufe und der letzten Nacheinspritzungsstufe basierend auf den erhaltenen Erfassungswerten schrittweise reduziert.

8. Steuervorrichtung nach Anspruch 6 oder 7, wobei:

die elektronische Steuereinheit (30) konfiguriert ist, um die Kraftstoffeinspritzvorrichtung (12) so zu steuern, dass sie einen Einspritzzeitpunkt der Nacheinspritzung weiter nach vorne verlegt, wenn eine Bremsforderung an den Verbrennungsmotor gestellt wird; und

die elektronische Steuereinheit (30) konfiguriert ist, um die Kraftstoffeinspritzvorrichtung (12) so zu steuern, dass sie einen Einspritzzeitpunkt der letzten Nacheinspritzungsstufe weiter nach vorne verlegt, bevor sie die Einspritzzeitpunkte der mittleren Nacheinspritzungsstufe und der frühesten Nacheinspritzungsstufe weiter nach vorne verlegt, wenn die Bremsforderung an den Verbrennungsmotor gestellt wird.

9. Steuervorrichtung nach Anspruch 8, wobei:

die elektronische Steuereinheit (30) konfiguriert ist, um die Kraftstoffeinspritzvorrichtung (12) so zu steuern, dass sie mehrere Nacheinspritzungsstufen als die mittlere Nacheinspritzungsstufe ausführt; und

die elektronische Steuereinheit (30) konfiguriert ist, um die Kraftstoffeinspritzvorrichtung (12) so zu steuern, dass sie beginnend mit einer späteren Nacheinspritzungsstufe nacheinander die Einspritzmengen der mehreren Nacheinspritzungsstufen als die mittlere Nacheinspritzungsstufe gemäß den Betriebsbedingungen des Verbrennungsmotors reduziert, wenn eine Motorlast eine niedrige Last oder eine hohe Last ist, und dass sie beginnend mit einer früheren Nacheinspritzungsstufe nacheinander die Einspritzmengen der mehreren Nacheinspritzungsstufen als die mittlere Nacheinspritzungsstufe gemäß den Betriebsbedingungen des Verbrennungsmotors reduziert, wenn die Motorlast eine mittlere Last ist.

10. Steuervorrichtung nach Anspruch 8 oder 9, wobei, wenn der Einspritzzeitpunkt der Nacheinspritzung weiter nach vorne verlegt wird, und ein Zeitraum zwischen einer bestimmten Nacheinspritzungsstufe, deren Einspritzzeitpunkt geändert werden soll, und einer vorausgegangenen Nacheinspritzungsstufe kleiner als ein vorbestimmter Minimalzeitraum wird, die elektronische Steuereinheit (30) konfiguriert ist, um die Kraftstoffeinspritzvorrichtung (12) so zu steuern, dass sie den Einspritzzeitpunkt der vorausgegangenen Nacheinspritzungsstufe sowie den Einspritzzeitpunkt der bestimmten Nacheinspritzungsstufe weiter nach vorne verlegt, so dass der Minimalzeitraum eingehalten wird.

11. Steuervorrichtung nach einem der Ansprüche 1 bis 10, wobei:

der Verbrennungsmotor einen NOx-Speicherreduktionskatalysator (18) enthält, der in einem Auslasskanal des Verbrennungsmotors angeordnet ist; und

die elektronische Steuereinheit (30) konfiguriert ist, um die Kraftstoffeinspritzvorrichtung (12) so zu steuern, dass sie die Nacheinspritzung ausführt, wenn in dem NOx-Speicherreduktionskatalysator (18) gespeichertes NOx eine vorbestimmte Speichergrenzmenge erreicht.

**12.** Steuervorrichtung nach einem der Ansprüche 1 bis 11, wobei die elektronische Steuereinheit (30) konfiguriert ist, um die Kraftstoffeinspritzvorrichtung (12) so zu steuern, dass die Einspritzmenge jeder Nacheinspritzungsstufe umso größer ist, je später die Stufe ist.

**13.** Steuervorrichtung nach einem der Ansprüche 1 bis 12, wobei die elektronische Steuereinheit (30) konfiguriert ist, um die Kraftstoffeinspritzvorrichtung (12) zu steuern, indem sie einen Startzeitpunkt der Nacheinspritzung gemäß einer Motorlast und einer Motordrehzahl des Verbrennungsmotors einstellt.

**14.** Steuervorrichtung nach Anspruch 13, wobei die elektronische Steuereinheit (30) konfiguriert ist, um die Kraftstoffeinspritzvorrichtung (12) zu steuern, indem sie den Startzeitpunkt der Nacheinspritzung basierend auf einem Ladedruck und/oder einer Ansauglufttemperatur des Verbrennungsmotors korrigiert.

**15.** Steuervorrichtung nach einem der Ansprüche 1 bis 14, wobei die elektronische Steuereinheit (30) konfiguriert ist, um die Kraftstoffeinspritzvorrichtung (12) zu steuern, indem sie einen Endzeitpunkt der Nacheinspritzung gemäß einer Motorlast und einer Motordrehzahl des Verbrennungsmotors einstellt.

**16.** Steuervorrichtung nach Anspruch 15, wobei die elektronische Steuereinheit (30) konfiguriert ist, um die Kraftstoffeinspritzvorrichtung (12) zu steuern, indem sie den Endzeitpunkt der Nacheinspritzung basierend auf einer Beziehung zwischen einem Ladedruck und einem Kraftstoffeinspritzdruck des Verbrennungsmotors und/oder basierend auf einer Ansauglufttemperatur des Verbrennungsmotors korrigiert.

**Revendications**

**1.** Dispositif de commande d'un moteur à combustion interne, le moteur à combustion interne comprenant un dispositif d'injection de carburant (12) qui injecte du carburant dans un cylindre, comprenant :
une unité de commande électronique (30) configurée pour :

commander le dispositif d'injection de carburant (12) de façon à réaliser une post-injection comprenant des post-injections à plusieurs étages, sur une course de détente du moteur à combustion interne après une combustion provoquée par une injection principale ; et
commander le dispositif d'injection de carburant (12) de telle sorte qu'une quantité d'injection d'une post-injection de tout premier étage en tant qu'une des post-injections à plusieurs étages est plus petite que la quantité d'injection de chacune des post-injections d'étage suivant qui suivent la post-injection de tout premier étage, **caractérisé en ce que**,
l'unité de commande électronique (30) est configurée pour commander le dispositif d'injection de carburant (12), de façon à réaliser au moins des post-injections à trois étages comprenant la post-injection de tout premier étage, une post-injection de dernier étage, et une post-injection d'étage intermédiaire entre la post-injection de tout premier étage et la post-injection de dernier étage ;
l'unité de commande électronique (30) est configurée pour établir une quantité d'injection de cible sur la base de laquelle les quantités d'injection de la post-injection d'étage intermédiaire et de la post-injection de dernier étage sont augmentées en fonction d'une demande d'accélération, quand la demande d'accélération est générée pour le moteur à combustion interne ; et
l'unité de commande électronique (30) est configurée pour commander le dispositif d'injection de carburant (12) de façon à augmenter la quantité d'injection de la post-injection d'étage intermédiaire avant d'augmenter la quantité d'injection de la post-injection de dernier étage, en fonction de conditions de fonctionnement du moteur à combustion interne, quand la demande d'accélération est générée pour le moteur à combustion interne, et augmenter la quantité d'injection de la post-injection de dernier étage, une fois que la quantité d'injection de la post-injection d'étage intermédiaire est augmentée jusqu'à une valeur de cible de la post-injection d'étage intermédiaire qui est déterminée en fonction de la quantité d'injection de cible.

**2.** Dispositif de commande selon la revendication 1, dans lequel l'unité de commande électronique (30) est configurée pour obtenir des valeurs de détection qui varient pas à pas d'un capteur de pression de suralimentation qui détecte la pression de suralimentation du moteur à combustion interne, comme condition de fonctionnement du moteur à combustion interne, et commander le dispositif d'injection de carburant (12) de façon à augmenter les quantités d'injection de la post-injection d'étage intermédiaire et de la post-injection de dernier étage d'une manière pas à pas, sur la base des valeurs de détection obtenues.

3. Dispositif de commande selon la revendication 1 ou 2, dans lequel :

l'unité de commande électronique (30) est configurée pour commander le dispositif d'injection de carburant (12) de façon à réaliser une pluralité d'étages de post-injections comme post-injection d'étage intermédiaire ; et l'unité de commande électronique (30) est configurée pour commander le dispositif d'injection de carburant (12) de façon à augmenter de manière séquentielle les quantités d'injection de la pluralité d'étages de post-injections comme post-injection d'étage intermédiaire, en commençant par une post-injection de tout premier étage, en fonction des conditions de fonctionnement du moteur à combustion interne, quand une charge de moteur est une faible charge ou une forte charge, et augmenter de manière séquentielle les quantités d'injection de la pluralité d'étages de post-injections comme post-injection d'étage intermédiaire, en commençant par une post-injection de dernier étage, en fonction des conditions de fonctionnement du moteur à combustion interne, quand la charge de moteur est une charge moyenne.

4. Dispositif de commande selon l'une quelconque des revendications 1 à 3, dans lequel :

l'unité de commande électronique (30) est configurée pour commander le dispositif d'injection de carburant (12) de façon à changer un calage d'injection de la post-injection vers un côté de retard, quand une demande d'accélération est générée pour le moteur à combustion interne ; et l'unité de commande électronique (30) est configurée pour commander le dispositif d'injection de carburant (12) de façon à changer un temps d'injection de la post-injection de tout premier étage vers le côté de retard, avant de changer les temps d'injection de la post-injection d'étage intermédiaire et de la post-injection de dernier étage vers le côté de retard, quand la demande d'accélération est générée pour le moteur à combustion interne.

5. Dispositif de commande selon la revendication 4, dans lequel, quand le calage d'injection de la post-injection est changé vers le côté de retard, et un intervalle entre un étage donné de la post-injection dont un temps d'injection doit être changé et une post-injection d'étage suivant devient plus petit qu'un intervalle minimum prédéterminé, l'unité de commande électronique (30) est configurée pour commander le dispositif d'injection de carburant (12) de façon à changer le temps d'injection de la post-injection d'étage suivant vers le côté de retard ainsi que celui de l'étage donné de la post-injection, de telle sorte que l'intervalle minimum est maintenu.

6. Dispositif de commande d'un moteur à combustion interne, le moteur à combustion interne comprenant un dispositif d'injection de carburant (12) qui injecte du carburant dans un cylindre, comprenant :
une unité de commande électronique (30) configurée pour :

commander le dispositif d'injection de carburant (12) de façon à réaliser une post-injection comprenant des post-injections à plusieurs étages, sur une course de détente du moteur à combustion interne après une combustion provoquée par une injection principale ; et commander le dispositif d'injection de carburant (12) de telle sorte qu'une quantité d'injection d'une post-injection de tout premier étage en tant qu'une des post-injections à plusieurs étages est plus petite que la quantité d'injection de chacune des post-injections d'étage suivant qui suivent la post-injection de tout premier étage, **caractérisé en ce que**, l'unité de commande électronique (30) est configurée pour commander le dispositif d'injection de carburant (12), de façon à réaliser au moins des post-injections à trois étages comprenant la post-injection de tout premier étage, une post-injection de dernier étage, et une post-injection d'étage intermédiaire entre la post-injection de tout premier étage et la post-injection de dernier étage ; l'unité de commande électronique (30) est configurée pour établir une quantité d'injection de cible sur la base de laquelle les quantités d'injection de la post-injection d'étage intermédiaire et de la post-injection de dernier étage sont réduites en fonction d'une demande de décélération, quand la demande de décélération est générée pour le moteur à combustion interne ; et l'unité de commande électronique (30) est configurée pour commander le dispositif d'injection de carburant (12) de façon à réduire la quantité d'injection de la post-injection d'étage intermédiaire avant de réduire la quantité d'injection de la post-injection de dernier étage, en fonction de conditions de fonctionnement du moteur à combustion interne, quand la demande de décélération est générée pour le moteur à combustion interne, et réduire la quantité d'injection de la post-injection de dernier étage, une fois que la quantité d'injection de la post-injection d'étage intermédiaire est réduite jusqu'à une valeur de cible de la post-injection d'étage intermédiaire qui est déterminée en fonction de la quantité d'injection de cible.

7. Dispositif de commande selon la revendication 6, dans lequel l'unité de commande électronique (30) est configurée pour obtenir des valeurs de détection qui varient pas à pas d'un capteur de pression de suralimentation qui détecte la pression de suralimentation du moteur à combustion interne, comme condition de fonctionnement du moteur à combustion interne, et commander le dispositif d'injection de carburant (12) de façon à réduire les quantités d'injection de la post-injection d'étage intermédiaire et de la post-injection de dernier étage d'une manière pas à pas, sur la base des valeurs de détection obtenues.

8. Dispositif de commande selon la revendication 6 ou 7, dans lequel :

   l'unité de commande électronique (30) est configurée pour commander le dispositif d'injection de carburant (12) de façon à changer un calage d'injection de la post-injection vers un côté d'avance, quand une demande de décélération est générée pour le moteur à combustion interne ; et
   l'unité de commande électronique (30) est configurée pour commander le dispositif d'injection de carburant (12) de façon à changer un temps d'injection de la post-injection de dernier étage vers le côté d'avance, avant de changer les temps d'injection de la post-injection d'étage intermédiaire et de la post-injection de tout premier étage vers le côté d'avance, quand la demande de décélération est générée pour le moteur à combustion interne.

9. Dispositif de commande selon la revendication 8, dans lequel :

   l'unité de commande électronique (30) est configurée pour commander le dispositif d'injection de carburant (12) de façon à réaliser une pluralité d'étages de post-injections comme post-injection d'étage intermédiaire ; et
   l'unité de commande électronique (30) est configurée pour commander le dispositif d'injection de carburant (12) de façon à réduire de manière séquentielle les quantités d'injection de la pluralité d'étages de post-injections comme post-injection d'étage intermédiaire, en commençant par une post-injection de dernier étage, en fonction des conditions de fonctionnement du moteur à combustion interne, quand une charge de moteur est une faible charge ou une forte charge, et réduire de manière séquentielle les quantités d'injection de la pluralité d'étages de post-injections comme post-injection d'étage intermédiaire, en commençant par une post-injection de tout premier étage, en fonction des conditions de fonctionnement du moteur à combustion interne, quand la charge de moteur est une charge moyenne.

10. Dispositif de commande selon la revendication 8 ou la revendication 9, dans lequel, quand le calage d'injection de la post-injection est changé vers le côté d'avance, et un intervalle entre un étage donné de la post-injection dont un temps d'injection doit être changé et une post-injection d'étage précédent devient plus petit qu'un intervalle minimum prédéterminé, l'unité de commande électronique (30) est configurée pour commander le dispositif d'injection de carburant (12) de façon à changer le temps d'injection de la post-injection d'étage précédent vers le côté d'avance ainsi que celui de l'étage donné de la post-injection, de telle sorte que l'intervalle minimum est maintenu.

11. Dispositif de commande selon l'une quelconque des revendications 1 à 10, dans lequel :

    le moteur à combustion interne comprend un catalyseur de réduction de stockage de NOx (18) disposé dans un passage d'échappement du moteur à combustion interne ; et
    l'unité de commande électronique (30) est configurée pour commander le dispositif d'injection de carburant (12) de façon à réaliser la post-injection, quand du NOx stocké dans le catalyseur de réduction de stockage de NOx (18) atteint une quantité de limite de stockage prédéterminée.

12. Dispositif de commande selon l'une quelconque des revendications 1 à 11, dans lequel l'unité de commande électronique (30) est configurée pour commander le dispositif d'injection de carburant (12), de telle sorte que la quantité d'injection de chaque étage de la post-injection est plus grande lorsque l'étage est plus tard.

13. Dispositif de commande selon l'une quelconque des revendications 1 à 12, dans lequel l'unité de commande électronique (30) est configurée pour commander le dispositif d'injection de carburant (12) en établissant un temps de démarrage de la post-injection en fonction d'une charge de moteur et d'une vitesse de moteur du moteur à combustion interne.

14. Dispositif de commande selon la revendication 13, dans lequel l'unité de commande électronique (30) est configurée pour commander le dispositif d'injection de carburant (12) en corrigeant le temps de démarrage de la post-injection sur la base d'une pression de suralimentation et/ou d'une température d'air d'admission du moteur à combustion interne.

15. Dispositif de commande selon l'une quelconque des revendications 1 à 14, dans lequel l'unité de commande électronique (30) est configurée pour commander le dispositif d'injection de carburant (12), en établissant un temps de fin de la post-injection en fonction d'une charge de moteur et d'une vitesse de moteur du moteur à combustion interne.

16. Dispositif de commande selon la revendication 15, dans lequel l'unité de commande électronique (30) est configurée pour commander le dispositif d'injection de carburant (12), en corrigeant le temps de fin de la post-injection sur la base d'une relation entre une pression de suralimentation et une pression d'injection de carburant du moteur à combustion interne et/ou sur la base d'une température d'air d'admission du moteur à combustion interne.

# FIG.1

# FIG.2

# FIG.3

SMOKE

INJECTION
AMOUNT - LARGE

INJECTION
AMOUNT - SMALL

CRANK ANGLE

# FIG.4

EARLY

EQUAL SMOKE
INJECTION TIMING

LATE

INJECTION
AMOUNT

# *FIG.5*

## NUMBER OF TIMES MAP

## *FIG.6*

## INTERVAL MAP

# *FIG.7*

## INJECTION AMOUNT MAP

# *FIG.8*

# FIG. 9

## BASIC INJECTION START TIME MAP

# FIG. 10

## BOOST PRESSURE CORRECTION MAP

# FIG. 11

INTAKE AIR TEMPERATURE CORRECTION MAP

# FIG. 12

BASIC INJECTION ENDING TIME MAP

# FIG. 13

## PRESSURE DIFFERENCE CORRECTION MAP

CORRECTION AMOUNT (ADVANCE AMOUNT)

0

SMALL ←    TARGET PRESSURE DIFFERENCE $\triangle$P    → LARGE

# FIG. 14

## INTAKE AIR TEMPERATURE CORRECTION MAP

CORRECTION AMOUNT (ADVANCE AMOUNT)

0

LOW ←    TARGET INTAKE AIR TEMPERATURE $\triangle$Tim    → HIGH

# F I G . 15

```
        ┌──────────────┐
        │    START     │
        └──────┬───────┘
               │              S2
        ┌──────▼───────────────┐
        │  READ INFORMATION    │
        │ CONCERNING OPERATING │
        │      CONDITIONS      │
        └──────┬───────────────┘
               │              S4
        ┌──────▼───────────────┐
        │ READ INFORMATION NEEDED │
        │ FOR DETERMINATION OF RICH │
        │      COMBUSTION      │
        └──────┬───────────────┘
               │
               │            S6
              ╱ ╲
             ╱   ╲    ANY
            ╱     ╲ REQUEST FOR RICH ╲   NO
            ╲     ╱ COMBUSTION?      ╱─────┐
             ╲   ╱                        │
              ╲ ╱                         │
               │ YES        S8            │
        ┌──────▼───────────────┐          │
        │ CALCULATE INJECTION TIME │      │
        │ AND INJECTION AMOUNT OF  │      │
        │   EACH POST INJECTION    │      │
        └──────┬───────────────┘          │
               │            S10           │
        ┌──────▼───────────────┐          │
        │ CHANGE INJECTION AMOUNT │       │
        │   AND INJECTION TIME    │       │
        └──────┬───────────────┘          │
               │                          │
               ●◄─────────────────────────┘
               │
        ┌──────▼───────┐
        │    RETURN    │
        └──────────────┘
```

# FIG. 16

# FIG. 17

# FIG. 18

# F I G . 19

```
                    ┌─────────────┐
                    │    START    │
                    └─────────────┘
                           │
                           ▼
        ┌──────────────────────────────┐
        │     READ INFORMATION          │
        │  CONCERNING OPERATING         │───S12
        │       CONDITIONS              │
        └──────────────────────────────┘
                           │
                           ▼
        ┌──────────────────────────────┐
        │  CALCULATE TARGET VALUE       │
        │ OF TOTAL INJECTION AMOUNT,    │───S14
        │  AND TARGET VALUE OF EACH     │
        │  STAGE OF POST INJECTION      │
        └──────────────────────────────┘
                           │
                           ▼
```

$$Q_{m,i} < Q_{m,end} \; ? \qquad \text{S16}$$

NO

YES

**S18**

INCREASE MIDDLE-STAGE
INJECTION AMOUNT
$Q'_{m,i} = Q_{m,i}+Q_{L,i}-Q_{L,i-1}$ (4)
$Q'_{L,i} = Q_{L,0}$ (5)

**S20**

INCREASE LAST-STAGE
INJECTION AMOUNT
$Q'_{m,i} = Q_{m,end}$ (6)
$Q'_{L,i} = Q_{L,i-1}+Q_{m,end}-Q_{m,i}$ (7)

CALCULATE INJECTION TIME
AND INJECTION AMOUNT OF ───S22
EACH POST INJECTION

CHANGE INJECTION AMOUNT ───S24
AND INJECTION TIME

RETURN

# F I G . 20

# FIG. 21

# F I G . 22

```
                    START

                      │
                      ▼
        ┌──────────────────────────┐
        │    READ INFORMATION       │
        │ CONCERNING OPERATING      │─── S12
        │      CONDITIONS           │
        └──────────────────────────┘
                      │
                      ▼
        ┌──────────────────────────┐
        │ CALCULATE TARGET VALUE    │
        │ OF TOTAL INJECTION AMOUNT,│─── S14
        │  AND TARGET VALUE OF EACH │
        │   STAGE OF POST INJECTION │
        └──────────────────────────┘
                      │
                      ▼
                             S30
```

$$Q_{m,i} < Q_{m,end} \ ?$$

NO

YES

S32

REDUCE MIDDLE-STAGE
INJECTION AMOUNT
$Q'_{m,i} = Q_{m,i}+Q_{L,i}-Q_{L,i-1}$ (4)
$Q'_{L,i} = Q_{L,0}$ (5)

S34

REDUCE LAST-STAGE
INJECTION AMOUNT
$Q'_{m,i} = Q_{m,end}$ (6)
$Q'_{L,i} = Q_{L,i-1}+Q_{m,end}-Q_{m,i}$ (7)

CALCULATE INJECTION TIME
AND INJECTION AMOUNT OF
EACH POST INJECTION ─── S22

CHANGE INJECTION AMOUNT
AND INJECTION TIME ─── S24

RETURN

FIG.23

# F I G . 24

# FIG. 25

AT START
OF DECELERATION

DURING DECELERATION
(COMPARATIVE EXAMPLE)

DURING DECELERATION
(EMBODIMENT)

AT COMPLETION
OF DECELERATION

P1    Pm-1    Pm    Plast

EP 3 236 054 B1

# FIG. 26

**AT START OF DECELERATION**

IntP1,0 → [P1] IntPm−1,0 → [Pm−1] IntPm,0 → [Pm] IntPlast,0 → [Plast]

**DURING DECELERATION (COMPARATIVE EXAMPLE)**

IntP1,i' (=IntP1,0) → [P1]   IntPm−1,i' (=IntPm−1,0) → [Pm−1]   IntPm,i' (=IntPm,0) → [Pm]   IntPlast,i' (=IntPlast,end) → IntMin → [Plast]

**DURING DECELERATION (EMBODIMENT)**

IntP1,i' (=IntP1,0) → [P1]   IntPm−1,i' (=IntPm−1,0) → [Pm−1]   IntPm,i' (<IntPm,0) → IntMin → ① [Pm]   IntPlast,i' (=IntMin) → IntMin → [Plast] ← ①

**AT COMPLETION OF DECELERATION**

② IntP1,end → [P1]   IntPm−1,end → [Pm−1]   IntPm,end → [Pm]   IntPlast,end → [Plast]

EP 3 236 054 B1

**EP 3 236 054 B1**

**Patent documents cited in the description**

- JP 2010106753 A
- US 20030145581 A1
- US 20050252198 A1